(19) Europäisches Patentamt / European Patent Office / Office européen des brevets

(11) **EP 4 786 435 A1**

(12) **EUROPEAN PATENT APPLICATION**
published in accordance with Art. 153(4) EPC

(43) Date of publication:
05.08.2026 Bulletin 2026/32

(21) Application number: 24872563.2

(22) Date of filing: 27.09.2024

(51) International Patent Classification (IPC):
$C03C\ 27/12^{(2006.01)}$   $B32B\ 7/022^{(2019.01)}$
$B32B\ 17/10^{(2006.01)}$   $B32B\ 27/00^{(2006.01)}$
$C08K\ 5/541^{(2006.01)}$   $C08L\ 23/26^{(2025.01)}$

(52) Cooperative Patent Classification (CPC):
B32B 7/022; B32B 17/00; B32B 17/10;
B32B 27/00; C08K 5/541; C08L 23/26

(86) International application number:
PCT/JP2024/034804

(87) International publication number:
WO 2025/070782 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.09.2023 JP 2023170896
29.09.2023 JP 2023170897

(71) Applicant: Sekisui Chemical Co., Ltd.
Osaka-shi, Osaka 530-8565 (JP)

(72) Inventors:
• YAMAZAKI, Koshi
  Koka-shi, Shiga 528-8585 (JP)
• NOHARA, Atsushi
  Suzhou-shi, Jiangsu 215129 (CN)
• TAKAHASHI, Yuuma
  Dallas, Texas 75234 (US)

(74) Representative: Osha BWB
2, rue de la Paix
75002 Paris (FR)

(54) **INTERMEDIATE FILM, LAMINATE, METHODS FOR PRODUCING THESE, AND LAMINATED GLASS**

(57) Disclosed is an intermediate film which satisfies at least one of the requirement (A) and the requirement (B) described below. Requirement (A): The slope (21), obtained by (bending stiffness (2) - bending stiffness (1))/amount of change in thickness, is greater than -10. Requirement (B): The slope (31), obtained by (bending stiffness (3) - bending stiffness (1))/amount of change in thickness, is greater than -10. (Bending stiffnesses (1), (2), and (3) are respective bending stiffnesses [unit: N/mm] at 50°C of laminated glasses (1), (2), and (3) for measurement, which are respectively obtained by bonding two sheets of glass having a thickness of 2.75 mm by the intermediary of one, two, or three intermediate films. The amount of change in thickness is the amount of change [unit: mm] in the thickness of the intermediate films between the pair of glass sheets during the measurement of the bending stiffness (3) or the bending stiffness (2), with respect to the thickness of the intermediate film between the pair of glass sheets during the measurement of the bending stiffness (1).)

EP 4 786 435 A1

## Description

Technical Field

The present invention relates to: an interlayer film used in a laminated glass or the like; a laminate and a laminated glass having the interlayer film; and methods for producing the interlayer film and the laminate.

Background Art

Laminated glasses are safe due to minimal scattering of glass fragments even if broken as a result of external impacts, and are therefore widely used in windows in various vehicles, such as motor vehicles, railway cars, aircraft and ships, and in buildings and so on. Laminated glasses are widely known as structures in which an interlayer film for laminated glass, which is constituted from a thermoplastic resin or the like, is sandwiched between a pair of glass sheets to form an integrated body. When used in buildings, laminated glasses are used in glass floors, curtain walls, and so on, in addition to windows. In these applications, laminated glasses may be large in size and used for structural glazing.

In the past, ionomer resins were used in some cases in interlayer films for laminated glasses. Ethylene-unsaturated carboxylic acid-based copolymers, such as ethylene-(meth)acrylic acid-based copolymers, in which at least some carboxyl groups in side chains are crosslinked between molecular chains by metal cations, are known as ionomer resins used in interlayer films for laminated glasses (for example, see Patent Documents 1-3).

Citation List

Patent Literature

Patent Document 1: International Publication No. WO 2022/065146
Patent Document 2: Japanese Patent Application Publication No. 2014-58409
Patent Document 3: International Publication No. WO 2019/054363

Summary of Invention

Problem to be Solved by the Invention

However, laminated glasses require high stiffness when, for example, made large in size and used for structural glazing, as mentioned above. In addition, laminated glasses are generally used in outdoor environments, and therefore need to maintain good stiffness regardless of external temperature changes, and in particular need to exhibit high stiffness even at high temperatures close to 40°C.

However, interlayer films for laminated glasses obtained using ionomer resins can increase bending stiffness, but according to investigations by the inventors of the present invention, it was understood that maintaining high stiffness in high temperature environments is difficult.

Furthermore, because laminated glasses used in buildings often require impact resistance from the perspective of safety, interlayer films need to be thicker. In cases where an interlayer film is to be made thicker, a plurality of relatively thin films are laminated in some cases.

However, according to investigations by the inventors of the present invention, when thickness is increased by laminating a plurality of films in laminated glasses produced using this type of method, it was understood that stiffness at high temperature decreases. That is, it was understood that stiffness at high temperature decreases when the thickness of an interlayer film disposed between a pair of glass substrates in a laminated glass is higher.

Therefore, the present invention addresses the object of providing an interlayer film which can impart a laminate or laminated glass with excellent bending stiffness at high temperature, and, in particular, addresses a first object of providing an interlayer film which can impart a laminate or laminated glass with excellent bending stiffness at high temperature even if the thickness of interlayer films disposed between a pair of substrates such as glass members is increased by, for example, overlaying a plurality of interlayer films.

In addition, the present invention addresses a second object of providing an interlayer film capable of yielding a laminate or laminated glass having excellent stiffness in environments at temperatures of 20-40°C.

Means for Solving the Problem

As a result of diligent research, the inventors of the present invention found that the first problem mentioned above could be solved by setting, to be not less than a predetermined value, a slope determined from the bending stiffness at 50°C of a laminated glass for measurement, which is produced by sandwiching one interlayer film, the bending stiffness at 50°C of a laminated glass for measurement, which is produced by sandwiching two or three interlayer films, and from the amount of change in thickness of these laminated glasses. Based on this finding, they have completed a first aspect of the present invention, as described below. That is, the present invention provides [1] to [23] below.

[1] An interlayer film which satisfies at least one of requirement (A) or requirement (B) described below.

Requirement (A): The slope (21), which is obtained from (bending stiffness (2) - bending stiffness (1))/amount of change in thickness, is more than -10.
Requirement (B): The slope (31), which is obtained from (bending stiffness (3) - bending stiffness (1))/amount of change in thickness, is more than -10.
(It should be noted that bending stiffness (1) is the bending stiffness [unit: N/mm] at 50°C of a laminated glass (1) for measurement, which is obtained by bonding two sheets of glass having a thickness of 2.75 mm via one interlayer film. The bending stiffness (2) is the bending stiffness [unit: N/mm] at 50°C of a laminated glass (2) for measurement, which is obtained by bonding two sheets of glass having a thickness of 2.75 mm via two interlayer films. The bending stiffness (3) is the bending stiffness [unit: N/mm] at 50°C of a laminated glass (3) for measurement, which is obtained by bonding two sheets of glass having a thickness of 2.75 mm via three interlayer films. The amount of change in thickness is the amount of change [unit: mm] in the thickness of the interlayer films disposed between the pair of glass sheets during the measurement of the bending stiffness (2) or the bending stiffness (3), with respect to the thickness of the interlayer film disposed between the pair of glass sheets during the measurement of the bending stiffness (1).)

[2] The interlayer film according to [1] above, wherein the slope (21) is from -9 to 50 inclusive.
[3] The interlayer film according to [1] or [2] above, wherein the bending stiffness at 50°C of the laminated glass (1) for measurement is 700 N/mm or more.
[4] The interlayer film according to any of [1] to [3] above, which contains an ionomer resin.
[5] The interlayer film according to [4] above, wherein the ionomer resin includes a constituent unit (A) derived from an unsaturated carboxylic acid, a constituent unit (B) of a neutralized unsaturated carboxylic acid and a constituent unit (C) derived from ethylene.
[6] The interlayer film according to [5] above, wherein the ionomer resin includes a constituent unit (A) derived from (meth)acrylic acid, a constituent unit (B) of neutralized (meth)acrylic acid and a constituent unit (C) derived from ethylene.
[7] The interlayer film according to [5] or [6] above, wherein the total content of the constituent units (A) and (B) in the ionomer resin is from 10 mass% to 25 mass% inclusive relative to the total amount of constituent units that constitute the ionomer resin.
[8] The interlayer film according to any of [5] to [7] above, wherein the content of the constituent unit (B) is from 4 mass% to 17.5 mass% inclusive relative to the total amount of constituent units that constitute the ionomer resin.
[9] The interlayer film according to any of [5] to [8] above, wherein the constituent unit (B) includes at least one of magnesium or zinc.
[10] The interlayer film according to any of [5] to [9] above, wherein the content of a constituent unit derived from an alkyl (meth)acrylate in the ionomer resin is 15 mass% or less.
[11] The interlayer film according to any of [4] to [10] above, which further contains a silane coupling agent.
[12] The interlayer film according to any of [1] to [11] above, which has a width of 1 meter or more.
[13] The interlayer film according to any of [1] to [12] above, which is an extrusion molded product.
[14] The interlayer film according to any of [1] to [13] above, which has a glass transition temperature of from 50°C to 75°C inclusive.
[15] A laminate which comprises the interlayer film according to any of [1] to [14] above and a pair of substrates, with the interlayer film being disposed between the pair of substrates.
[16] The laminate according to [15] above, which is a laminated glass.
[17] The laminate according to [16] above, which is a laminated glass for a building structure.
[18] A method for producing the interlayer film according to any of [1] to [14] above, the method comprising: a step for obtaining a resin composition by kneading an ionomer resin with a mixture of an additive and an ethylene-(meth) acrylic acid-based copolymer; and
a step for extruding the resin composition.

[19] A method for producing a laminate, the method including a step for disposing the interlayer film according to any of [1] to [14] above between a pair of substrates.

[20] The method for producing a laminate according to [19] above, wherein a plurality of interlayer films are disposed between the pair of substrates.

[21] An interlayer film for which the slope (21a), which is obtained from (bending stiffness (2a) - bending stiffness (1))/amount of change in thickness, is more than -10.

(It should be noted that bending stiffness (1) is the bending stiffness [unit: N/mm] at 50°C of a laminated glass (1) for measurement, which is obtained by bonding two sheets of glass having a thickness of 2.75 mm via one interlayer film. The bending stiffness (2a) is the bending stiffness [unit: N/mm] at 50°C of a laminated glass (2a) for measurement, which is obtained by bonding two sheets of glass having a thickness of 2.75 mm via an interlayer film (2a), which has a different thickness from the aforementioned interlayer film. The amount of change in thickness is the amount of change [unit: mm] in the thickness of the interlayer film disposed between the pair of glass sheets during the measurement of the bending stiffness (2a), with respect to the thickness of the interlayer film disposed between the pair of glass sheets during the measurement of the bending stiffness (1).)

[22] A laminated glass which comprises a pair of glass members and one or more interlayer films disposed between the pair of glass members, with the pair of glass members being bonded via the one or more interlayer films, and

which satisfies at least one of requirement (A1) or requirement (B1) described below.

Requirement (A1): The slope (21c), which is obtained from (bending stiffness (2c) - bending stiffness (1c))/amount of change in thickness, is more than -10.

Requirement (B1): The slope (31c), which is obtained from (bending stiffness (3c) - bending stiffness (1c))/amount of change in thickness, is more than -10.

(It should be noted that bending stiffness (1c) is the bending stiffness [unit: N/mm] at 50°C of a laminated glass (1c) for measurement, which is obtained by bonding the pair of glass members via one interlayer film. The bending stiffness (2c) is the bending stiffness [unit: N/mm] at 50°C of a laminated glass (2c) for measurement, which is obtained by bonding the pair of glass members via two interlayer films. The bending stiffness (3c) is the bending stiffness [unit: N/mm] at 50°C of a laminated glass (3c) for measurement, which is obtained by bonding the pair of glass members via three interlayer films. The amount of change in thickness is the amount of change [unit: mm] in the thickness of the interlayer films disposed between the pair of glass members during the measurement of the bending stiffness (3c) or the bending stiffness (2c), with respect to the thickness of the interlayer film disposed between the pair of glass members during the measurement of the bending stiffness (1c).)

[23] A laminated glass which comprises a pair of glass members and an interlayer film disposed between the pair of glass members, with the pair of glass members being bonded via the interlayer film, and the laminated glass satisfies requirement (E1) below.

Requirement (E1): The slope (21ac), which is obtained from (bending stiffness (2ac) - bending stiffness (1ac))/amount of change in thickness, is more than -10.

(It should be noted that the bending stiffness (1ac) is the bending stiffness [unit: N/mm] at 50°C of the laminated glass. The bending stiffness (2ac) is the bending stiffness [unit: N/mm] at 50°C of a laminated glass for measurement, which is obtained by bonding the pair of glass members via one interlayer film which has a different thickness from the aforementioned interlayer film. The amount of change in thickness is the amount of change [unit: mm] in the thickness of the interlayer film disposed between the pair of glass members during the measurement of the bending stiffness (2ac) with respect to the thickness of the interlayer film disposed between the pair of glass members during the measurement of the bending stiffness (1ac).)

As a result of diligent research, the inventors of the present invention found that the second problem mentioned above could be solved by setting the ratio of the bending stiffness at 50°C relative to the bending stiffness at 25°C of a laminated glass for measurement, which is produced using an interlayer film, to be a certain value or higher. Based on this finding, they have completed a second aspect of the present invention, as described below. That is, the present invention provides [24] to [43] below.

[24] An interlayer film in which the ratio of the bending stiffness at 50°C relative to the bending stiffness at 25°C of a laminated glass for measurement, which is obtained by bonding two sheets of glass having a thickness of 2.75 mm via an interlayer film, is 0.5 or more.

[25] The interlayer film according to [24] above, wherein the bending stiffness at 50°C of the aforementioned laminated glass for measurement is 700 N/mm or more.

[26] The interlayer film according to [24] or [25] above, which contains an ionomer resin.

[27] The interlayer film according to [26] above, wherein the ionomer resin includes a constituent unit (A) derived from an unsaturated carboxylic acid, a constituent unit (B) of a neutralized unsaturated carboxylic acid and a constituent unit (C) derived from ethylene.

[28] The interlayer film according to [26] above, wherein the ionomer resin includes a constituent unit (A) derived from (meth)acrylic acid, a constituent unit (B) of neutralized (meth)acrylic acid and a constituent unit (C) derived from ethylene.

[29] The interlayer film according to [27] or [28] above, wherein the total content of the constituent units (A) and (B) in the ionomer resin is from 10 mass% to 25 mass% inclusive relative to the total amount of constituent units that constitute the ionomer resin.

[30] The interlayer film according to any of [27] to [29] above, wherein the content of the constituent unit (B) is from 4 mass% to 17.5 mass% inclusive relative to the total amount of constituent units that constitute the ionomer resin.

[31] The interlayer film according to any of [27] to [30] above, wherein the constituent unit (B) includes at least one of magnesium or zinc.

[32] The interlayer film according to any of [27] to [31] above, wherein the content of a constituent unit derived from an alkyl (meth)acrylate in the ionomer resin is 15 mass% or less.

[33] The interlayer film according to any of [26] to [32] above, which further contains a silane coupling agent.

[34] The interlayer film according to any of [24] to [33] above, which has a width of 1 meter or more.

[35] The interlayer film according to any of [24] to [34] above, which is an extrusion molded product.

[36] The interlayer film according to any of [24] to [35] above, which has a glass transition temperature of from 50°C to 75°C inclusive.

[37] A laminate which comprises the interlayer film according to any of [24] to [36] above and a pair of substrates, with the interlayer film being disposed between the pair of substrates.

[38] The laminate according to [37] above, which is a laminated glass.

[39] The laminate according to [38] above, which is a laminated glass for a building structure.

[40] A method for producing the interlayer film according to any of [24] to [36] above, the method comprising: a step for obtaining a resin composition by kneading an ionomer resin with a mixture of an additive and an ethylene-(meth) acrylic acid-based copolymer; and
a step for extruding the resin composition.

[41] A method for producing a laminate, the method including a step for disposing the interlayer film according to any of [24] to [36] above between a pair of substrates.

[42] The method for producing a laminate according to [41] above, wherein a plurality of interlayer films are disposed between the pair of substrates.

[43] A laminated glass in which the ratio of the bending stiffness at 50°C relative to the bending stiffness at 25°C is 0.5 or more.

Advantageous Effects of Invention

By using the interlayer film of the first aspect of the present invention, it is possible to impart a laminate or laminated glass with excellent bending stiffness at high temperature. In particular, it is possible to impart a laminate or laminated glass with excellent bending stiffness at high temperature even if the thickness of interlayer films disposed between a pair of substrates such as glass members is increased by, for example, overlaying a plurality of interlayer films.

By using the interlayer film of the second aspect of the present invention, it is possible to obtain a laminate or laminated glass which has excellent stiffness in environments at temperatures of 20-40°C.

Brief Description of Drawings

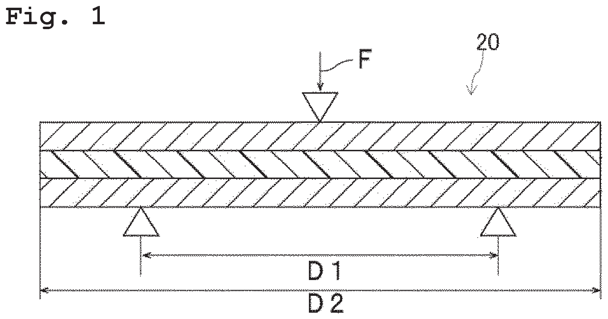

FIG. 1 is a schematic diagram that shows a method for measuring bending stiffness.

Description of Embodiments

<<First embodiment>>

The first aspect of the present invention will now be explained in greater detail with reference to a first embodiment.

<Bending stiffness>

An interlayer film according to the first embodiment of the present invention satisfies at least one of requirement (A) or requirement (B) described below.

Requirement (A): The slope (21), which is obtained from (bending stiffness (2) - bending stiffness (1))/amount of change in thickness, is more than -10.

Requirement (B): The slope (31), which is obtained from (bending stiffness (3) - bending stiffness (1))/amount of change in thickness, is more than -10.

Here, bending stiffness (1) is the bending stiffness [unit: N/mm] at 50°C of a laminated glass (1) for measurement, which is obtained by bonding two sheets of glass having a thickness of 2.75 mm via one interlayer film. The bending stiffness (2) is the bending stiffness [unit: N/mm] at 50°C of a laminated glass (2) for measurement, which is obtained by bonding two sheets of glass having a thickness of 2.75 mm via two interlayer films. The bending stiffness (3) is the bending stiffness [unit: N/mm] at 50°C of a laminated glass (3) for measurement, which is obtained by bonding two sheets of glass having a thickness of 2.75 mm via three interlayer films.

In addition, the amount of change in thickness is the amount of change [unit: mm] in the thickness of the interlayer films disposed between the pair of glass sheets during the measurement of the bending stiffness (3) or the bending stiffness (2) with respect to the thickness of the interlayer film disposed between the pair of glass sheets during the measurement of the bending stiffness (1). Therefore, in requirement (A), the amount of change in thickness is a value obtained by subtracting the thickness of one interlayer film during the measurement of the bending stiffness (1) (that is, in the laminated glass (1) for measurement) from the total thickness of two interlayer films during the measurement of the bending stiffness (2) (that is, in the laminated glass (2) for measurement). In addition, in requirement (B), the amount of change in thickness is a value obtained by subtracting the thickness of one interlayer film during the measurement of the bending stiffness (1) from the total thickness of three interlayer films during the measurement of the bending stiffness (3) (that is, in the laminated glass (3) for measurement).

If both the slope (21) and the slope (31) are -10 or lower in the interlayer film, it is difficult to achieve excellent bending stiffness at a high temperature close to 40°C. In particular, in a case where the thickness of interlayer films disposed between a pair of substrates (for example, a pair of glass members) is increased by laminating a plurality of interlayer films, it is difficult to achieve excellent bending stiffness at a high temperature close to 40°C in a laminate such as a laminated glass produced using the interlayer film.

In the interlayer film according to the first embodiment, one of the slope (21) or the slope (31) should be more than -10, but it is more preferable for both the slope (21) and the slope (31) to be more than -10. When both the slope (21) and the slope (31) are more than -10, it is possible to reliably achieve excellent bending stiffness at a high temperature in a case where the thickness of interlayer films disposed between a pair of substrates (for example, glass members) is increased in a laminate such as a laminated glass.

The slope (21) is preferably -9 or more, more preferably -4 or more, and further preferably 0 or more. When the slope (21) is higher, it is easier to prevent a decrease in bending stiffness at high temperature, and in particular, it is easier to prevent a decrease in bending stiffness at high temperature in a case where the thickness of interlayer films disposed between a pair of substrates (for example, glass members) is higher. The slope (21) is not particularly limited, but is preferably 50 or less, more preferably 30 or less, and further preferably 20 or less from the perspective of readily imparting the interlayer film with flexibility, adhesive properties, and so on.

From perspectives similar to those for the slope (21), the slope (31) is preferably -9 or more, more preferably -4 or more, and further preferably 0 or more. The slope (31) is not particularly limited, but is preferably 50 or less, more preferably 30 or less, and further preferably 20 or less from the perspective of readily imparting the interlayer film with flexibility, adhesive properties, and so on.

The interlayer film according to the first embodiment preferably satisfies at least one of requirement (C) or requirement (D) below. Requirement (C): The slope (21b), which is obtained from (bending stiffness (2b) - bending stiffness (1b))/amount of change in thickness, is 0 or more.

Requirement (D): The slope (31b), which is obtained from (bending stiffness (3b) - bending stiffness (1b))/amount of change in thickness, is 0 or more.

Here, the bending stiffness (1b) is the bending stiffness [unit: N/mm] at 25°C of the laminated glass (1) for measurement. The bending stiffness (2b) is the bending stiffness [unit: N/mm] at 25°C of the laminated glass (2) for measurement. The bending stiffness (3b) is the bending stiffness [unit: N/mm] at 25°C of the laminated glass (3) for measurement.

In addition, the amount of change in thickness is the amount of change [unit: mm] in the thickness of the interlayer films disposed between the pair of glass sheets during the measurement of the bending stiffness (3b) or the bending stiffness (2b) with respect to the thickness of the interlayer film disposed between the pair of glass sheets during the measurement of the bending stiffness (1b). Therefore, in requirement (C), the amount of change in thickness is a value obtained by subtracting the thickness of one interlayer film during the measurement of the bending stiffness (1b) from the total thickness of two interlayer films during the measurement of the bending stiffness (2b). In addition, in requirement (D), the amount of change in thickness is a value obtained by subtracting the thickness of one interlayer film during the measurement of the bending stiffness (1b) from the total thickness of three interlayer films during the measurement of the bending stiffness (3b).

If one of the slope (21b) or the slope (31b) is 0 or more, it is possible to achieve superior bending stiffness close to normal temperature in the interlayer film according to the first embodiment. In particular, in a case where the thickness of interlayer films disposed between a pair of substrates (for example, a pair of glass members) is increased by laminating a plurality of interlayer films, it is easier to achieve excellent bending stiffness at normal temperature in a laminate such as a laminated glass produced using the interlayer film.

In the interlayer film according to the first embodiment, it is preferable for one of the slope (21b) or the slope (31b) to be 0 or more, but it is more preferable for both the slope (21b) and the slope (31b) to be 0 or more. When both the slope (21b) and the slope (31b) are 0 or more, it is possible to reliably achieve excellent bending stiffness at normal temperature in a case where the thickness of interlayer films disposed between a pair of substrates (for example, glass members) is increased in a laminate such as a laminated glass.

The slope (21b) is preferably 30 or more, more preferably 50 or more, further preferably 100 or more, and yet more preferably 200 or more. When the slope (21b) is higher, it is easier to prevent a decrease in bending stiffness at normal temperature, and in particular, it is easier to prevent a decrease in bending stiffness at normal temperature in a case where the thickness of interlayer films disposed between a pair of substrates (for example, glass members) is higher. The slope (21b) is not particularly limited, but is preferably 500 or less, more preferably 400 or less, and further preferably 300 or less from the perspective of readily imparting the interlayer film with flexibility, adhesive properties, and so on.

From perspectives similar to those for the slope (21b), the slope (31b) is preferably 30 or more, more preferably 50 or more, further preferably 100 or more, and yet more preferably 200 or more. The slope (31b) is not particularly limited, but is preferably 500 or less, more preferably 400 or less, and further preferably 300 or less from the perspective of readily imparting the interlayer film with flexibility, adhesive properties, and so on.

In the interlayer film according to the first embodiment, the bending stiffness at 50°C of the laminated glass (1) for measurement is preferably 700 N/mm or more. When the bending stiffness at 50°C of the laminated glass (1) for measurement is 700 N/mm or more, a laminate or laminated glass having the interlayer film according to the first embodiment tends to exhibit excellent stiffness in environments having relatively high temperatures of approximately 40-50°C. The bending stiffness of the laminated glass (1) for measurement at 50°C is preferably 800 N/mm or more, more preferably 850 N/mm or more, and further preferably 900 N/mm or more.

The bending stiffness of the laminated glass (1) for measurement at 50°C should be high, but may be, for example, 3000 N/mm or less, 2000 N/mm or less, 1500 N/mm or less, or 1000 N/mm or less from the perspective of ensuring a certain degree of flexibility of the interlayer film.

In the interlayer film according to the first embodiment, the bending stiffness at 25°C of the laminated glass (1) for measurement is preferably 900 N/mm or more. When the bending stiffness at 25°C of the laminated glass for measurement is 900 N/mm or more, a laminate or laminated glass having the interlayer film according to the first embodiment tends to exhibit excellent stiffness in normal temperature environments. The bending stiffness of the laminated glass (1) for measurement at 25°C is preferably 1000 N/mm or more, more preferably 1100 N/mm or more, and further preferably 1200 N/mm or more.

The bending stiffness of the laminated glass (1) for measurement at 25°C should be high, but may be, for example, 4000 N/mm or less, 3000 N/mm or less, 2300 N/mm or less, or 2000 N/mm or less from the perspective of imparting a certain degree of flexibility to the interlayer film.

In the interlayer film according to the first embodiment, the bending stiffness at 30°C of the laminated glass (1) for measurement is preferably 900 N/mm or more. When the bending stiffness at 30°C of the laminated glass for measurement is 900 N/mm or more, a laminate or laminated glass having the interlayer film according to the first embodiment tends to exhibit excellent stiffness in normal temperature environments. The bending stiffness of the laminated glass (1) for measurement at 30°C is preferably 1000 N/mm or more, more preferably 1100 N/mm or more, and further preferably 1200 N/mm or more.

The bending stiffness of the laminated glass (1) for measurement at 30°C should be high, but may be, for example, 4000 N/mm or less, 3000 N/mm or less, 2300 N/mm or less, or 2000 N/mm or less from the perspective of imparting a certain degree of flexibility to the interlayer film.

In the interlayer film according to the first embodiment, the bending stiffness at 40°C of the laminated glass (1) for measurement is preferably 800 N/mm or more. When the bending stiffness at 40°C of the laminated glass for measurement is 800 N/mm or more, a laminate or laminated glass having the interlayer film according to the first embodiment tends to exhibit excellent stiffness in normal temperature environments. The bending stiffness of the laminated glass (1) for measurement at 40°C is preferably 900 N/mm or more, more preferably 1000 N/mm or more, and further preferably 1100 N/mm or more.

The bending stiffness of the laminated glass (1) for measurement at 40°C should be high, but is, for example, 4000 N/mm or less, 3000 N/mm or less, 2300 N/mm or less, 2000 N/mm or less, or 1500 N/mm or less from the perspective of imparting a certain degree of flexibility to the interlayer film.

The bending stiffness can be adjusted by altering the type of resin, the composition of monomers that constitute the resin, the glass transition temperature (Tg) of the interlayer film or the thickness of the interlayer film. For example, the bending stiffness tends to increase if an ionomer resin is used, and if a high Tg component is used as a monomer that constitutes the ionomer resin, while the amount of a low Tg component is reduced, or the degree of neutralization is increased, the bending stiffness at 50°C tends to increase and the slope (21) and the slope (31) also tend to increase.

In addition, in a case where another resin component is used in addition to the ionomer resin, by reducing the content of the other resin component, high bending stiffness, and especially high bending stiffness at high temperature, tends to be maintained, and a high slope (21) and slope (31) also tend to be maintained. Furthermore, if the interlayer film is made thicker, the absolute value of bending stiffness (and especially bending stiffness at normal temperature) tends to increase.

Moreover, the bending stiffnesses (1) to (3) and (1b) to (3b) at 50°C or 25°C should be determined by preliminarily pressure bonding two glass sheets having a thickness of 2.75 mm via one to three interlayer films, then carrying out main pressure bonding in an autoclave to obtain a laminated glass for measurement, aging for one week, and then measuring the bending stiffness of the laminated glass for measurement in an environment at 25°C or 50°C. Moreover, production conditions for the laminated glass for measurement should be as shown in laminated glass production methods shown in the working examples section below. In addition, the glass sheets having a thickness of 2.75 mm used for measuring the bending stiffnesses (1) to (3) and (1b) to (3b) and the bending stiffnesses (2a) and (2ab) described later are float plate glasses, details of which are as shown in the working examples section.

<Glass transition temperature>

The interlayer film according to the first embodiment preferably has a glass transition temperature (Tg) of from 50°C to 75°C inclusive. When the interlayer film has a Tg value of 50°C or higher, a laminate such as a laminated glass having the interlayer film tends to have higher bending stiffness at 50°C. In addition, even if the thickness of interlayer films disposed between a pair of substrates (for example, glass) is increased by overlaying a plurality of interlayer films, it becomes easier to prevent a decrease in bending stiffness of a laminate (for example, a laminated glass) in a high temperature environment, and the slope (21) and slope (31) tend to increase. In addition, when the Tg value is 75°C or lower, the interlayer film tends to be imparted with a certain degree of flexibility. In addition, air removal properties during production of a laminated glass tend to improve. The glass transition temperature (Tg) of the interlayer film is more preferably 55°C or higher, further preferably 58°C or higher, and yet more preferably 60°C or higher. In addition, the glass transition temperature (Tg) of the interlayer film is more preferably 73°C or lower, and further preferably 71°C or lower.

The glass transition temperature can be adjusted by altering the composition of the resin that constitutes the interlayer film, and so on, and in the case of an ionomer resin described later, for example, the glass transition temperature tends to be increased by increasing the amount of the constituent unit (B) of a neutralized unsaturated carboxylic acid. In addition, by using a specific ion as the metal ion contained in constituent unit (B), the glass transition temperature tends to increase. Furthermore, by reducing the amount of a constituent unit derived from an alkyl (meth)acrylate, the glass transition temperature tends to increase.

Moreover, the glass transition temperature can be detected by carrying out viscoelasticity measurements using a dynamic viscoelasticity measurement apparatus and reading peak temperatures of loss tangent tan$\delta$, which are obtained from these viscoelasticity measurement results. Details of measurement conditions are as shown in the working examples section.

The interlayer film according to the first embodiment should contain a resin. The resin used in the interlayer film is preferably a thermoplastic resin. By using a thermoplastic resin in the interlayer film, a pair of substrates or a pair of glass sheets can be easily bonded via the interlayer film by means of thermo-compression bonding. In addition, examples of the resin used in the interlayer film include poly(vinyl acetal) resins, ethylene-vinyl acetate copolymer resins, ionomer resins, polyurethane resins and thermoplastic elastomers, but of these, ionomer resins are preferred. By using an ionomer resin, the bending stiffness at 25°C tends to increase.

In addition, by adjusting the monomer composition and so on of the ionomer resin, as described later, the bending stiffness at 50°C also tends to increase. Furthermore, by adjusting the monomer composition and so on, even if the thickness of interlayer films disposed between a pair of substrates (for example, glass) is increased by overlaying a plurality of interlayer films, it becomes easier to prevent a decrease in bending stiffness of a laminate (for example, a laminated glass) in a high temperature environment, and the slope (21) and slope (31) tend to increase.

[Ionomer resin]

Examples of the ionomer resin include ionomer resins of ethylene-unsaturated carboxylic acid-based copolymers. Ionomer resins are typically resins obtained by neutralizing ethylene-unsaturated carboxylic acid-based copolymers with metal ions.

Examples of unsaturated carboxylic acids include acrylic acid, methacrylic acid, 2-ethylacrylic acid, crotonic acid, maleic acid, fumaric acid, itaconic acid, maleic anhydride, fumaric anhydride, itaconic anhydride, monomethyl maleate and monoethyl maleate. In the ionomer resin, it is possible to use one of these unsaturated carboxylic acids alone, or a combination of two or more types thereof. Of these, acrylic acid and methacrylic acid are preferred. Therefore, the ionomer resin is preferably an ionomer resin of an ethylene-(meth)acrylic acid-based copolymer. Moreover, (meth)acrylic acid means methacrylic acid and/or acrylic acid, and the same applies to similar terms used hereafter.

In addition, examples of metal ions include ions of metals such as lithium, potassium, sodium, silver, copper, calcium, magnesium, titanium, zinc, aluminum, barium, beryllium, strontium, tin, lead, iron, cobalt, nickel, cadmium and mercury, but of these, at least one of magnesium or zinc is preferred, and magnesium is particularly preferred. It is possible to use one of these metal ions alone, or a combination of two or more types thereof. If at least one of magnesium or zinc, and especially magnesium, is used as the metal ion, a suitable crosslinked structure is formed, the glass transition temperature of the interlayer film tends to increase, and the bending stiffness at both 25°C and 50°C tend to increase. Furthermore, even if the thickness of interlayer films disposed between a pair of substrates (for example, glass) is increased by overlaying a plurality of interlayer films, it becomes easier to prevent a decrease in bending stiffness of a laminate (for example, a laminated glass) in a high temperature environment, and the slope (21) and slope (31) also tend to increase.

In a case where the ionomer resin is an ionomer resin of an ethylene-unsaturated carboxylic acid-based copolymer, the resin typically includes a constituent unit (A) derived from the unsaturated carboxylic acid, a constituent unit (B) derived from a neutralized product of the unsaturated carboxylic acid, and a constituent unit (C) derived from ethylene. Of these, in a case where the ionomer resin is an ionomer resin of an ethylene-(meth)acrylic acid-based copolymer, the resin typically includes a constituent unit derived from (meth)acrylic acid (constituent unit (A)), a constituent unit derived from a neutralized product of (meth)acrylic acid (constituent unit (B)), and a constituent unit (C) derived from ethylene. By including these constituent units (A), (B) and (C) in the ionomer resin, excellent bending stiffness at both 25°C and 50°C tend to be achieved. Furthermore, even if the thickness of interlayer films disposed between a pair of substrates (for example, glass) is increased by overlaying a plurality of interlayer films, it becomes easier to prevent a decrease in bending stiffness of a laminate (for example, a laminated glass) in a high temperature environment, and the slope (21) and slope (31) also tend to increase. In addition, by including these constituent units (A), (B) and (C) in an ionomer resin used in a third embodiment described later, the bending stiffness ratio is increased and excellent bending stiffness at 20-40°C tends to be achieved.

A monomer that constitutes the constituent unit (A) is not particularly limited as long as this is an unsaturated carboxylic acid, but acrylic acid and/or methacrylic acid are preferred. Of these, methacrylic acid is more preferred from perspectives such as bending stiffness and adhesive properties. Moreover, the constituent unit (A) is a constituent unit that is not neutralized by a metal ion.

The constituent unit (B) is a neutralized product of the constituent unit derived from an unsaturated carboxylic acid mentioned above, but is preferably a neutralized product of a constituent unit derived from acrylic acid and/or methacrylic acid, and is more preferably a constituent unit of a neutralized product of methacrylic acid. The constituent unit (B) is a constituent unit in which a hydrogen ion in a carboxyl group in an unsaturated carboxylic acid is replaced by metal ion. That is, a neutralized product of an unsaturated carboxylic acid in constituent unit (B) is a metal salt of an unsaturated carboxylic acid. The metal ion in the metal salt is as described above, but at least one of magnesium or zinc is preferred, and magnesium is particularly preferred.

Therefore, the constituent unit (B) preferably contains at least one of magnesium or zinc, and particularly preferably contains magnesium.

The total content of the constituent units (A) and (B) in the ionomer resin is preferably from 10 mass% to 25 mass% inclusive relative to the total amount of constituent units that constitute the ionomer resin. If the total content of the constituent units (A) and (B) is 10 mass% or more, the transparency, heat resistance, mechanical strength, and so on, of the interlayer film can be improved. In addition, if this total content is 25 mass% or less, flexibility, workability, adhesive properties, and so on, can be improved. The total content of the constituent units (A) and (B) is more preferably from 12 mass% to 23 mass% inclusive, and further preferably from 15 mass% to 20 mass% inclusive.

The content of the constituent unit (B) in the ionomer resin is preferably from 4 mass% to 18 mass% inclusive relative to the total amount of constituent units that constitute the ionomer resin. If the content of the constituent unit (B) is 4 mass% or more, the degree of crosslinking of the ionomer resin increases, and the bending stiffness, and especially the bending stiffness at 50°C, tends to increase. In addition, even if the thickness of interlayer films disposed between a pair of substrates (for example, glass) is increased by overlaying a plurality of interlayer films, it becomes easier to prevent a decrease in bending stiffness of a laminate (for example, a laminated glass) in a high temperature environment. Furthermore, if the content of the constituent unit (B) is 4 mass% or more, transparency, heat resistance, and so on, tend to increase. In addition, if the content of the constituent unit (B) is 18 mass% or less, the flexibility, adhesive properties, mechanical strength, workability, and so on, of the interlayer film tend to be improved.

The content of the constituent unit (B) in the ionomer resin is more preferably from 6 mass% to 17.5 mass% inclusive, further preferably from 7 mass% to 16 mass% inclusive, and yet more preferably from 10 mass% to 14 mass% inclusive.

From the perspective of readily increasing the impact resistance of the ionomer resin, the content of the constituent unit (C) derived from ethylene is preferably 70 mass% or more, more preferably 75 mass% or more, further preferably 80 mass% or more, and yet more preferably 82 mass% or more, based on the total amount of constituent units that constitute the ionomer resin. In addition, from the perspectives of transparency, mechanical strength and molding processing properties, the content of the constituent unit (C) derived from ethylene is preferably 90 mass% or less, more preferably 89 mass% or less, further preferably 88 mass% or less, and yet more preferably 85 mass% or less.

The content of the constituent unit (A) in the ionomer resin is not particularly limited, but is preferably from 3 mass% to 10 mass% inclusive, more preferably from 4 mass% to 9 mass% inclusive, and further preferably 8 mass% or less, based on the total amount of constituent units that constitute the ionomer resin.

The ionomer resin may be obtained by neutralizing, with a metal ion, a copolymer obtained by copolymerizing ethylene and an unsaturated carboxylic acid, and may also be obtained by neutralizing, with a metal ion, a copolymer obtained by copolymerizing ethylene, an unsaturated carboxylic acid and a monomer other than ethylene or an unsaturated carboxylic acid. Therefore, in a preferred embodiment, the ionomer resin may contain, in addition to the constituent units (A), (B) and (C), a constituent unit other than the constituent units (A), (B) and (C) (also referred to as "the other constituent unit" hereinafter).

Examples of the other constituent unit include a constituent unit (D) derived from an alkyl (meth)acrylate. By having the constituent unit (D), it is possible to adjust, for example, the glass transition temperature (Tg) of the ionomer resin. Examples of the alkyl (meth)acrylate include alkyl (meth)acrylates having 1-10 carbon atoms, such as methyl (meth)acrylate, ethyl (meth)acrylate, isobutyl (meth)acrylate, n-butyl (meth)acrylate and 2-ethylhexyl (meth)acrylate.

From the perspective of not lowering the glass transition temperature of the interlayer film more than is necessary, the content of the constituent unit (D) derived from an alkyl (meth)acrylate is preferably 15 mass% or less, more preferably 8 mass% or less, further preferably 4.5 mass% or less, and yet more preferably 2 mass% or less. In addition, from the perspective of increasing stiffness at high temperature without causing a decrease in glass transition temperature and the perspective of not causing a decrease in stiffness at high temperature even if thickness is increased by overlaying a plurality of interlayer films, the content of the constituent unit (D) should be low, and may be 0 mass% or more, and it is preferable for the ionomer resin not to contain the constituent unit (D).

In addition, isobutyl (meth)acrylate is generally suitable for use as an alkyl (meth)acrylate in ionomer resins, but in the present invention, it is preferable for the ionomer resin not to contain a constituent unit derived from isobutyl (meth)acrylate or to contain only a small quantity of said constituent unit. Therefore, the content of a constituent unit derived from isobutyl (meth)acrylate is preferably 15 mass% or less, more preferably 8 mass% or less, further preferably 4.5 mass% or less, and yet more preferably 2 mass% or less. In addition, the content of a constituent unit derived from isobutyl (meth)acrylate may be 0 mass% or more, and it is preferable for the ionomer resin not to contain a constituent unit derived from isobutyl (meth)acrylate.

In addition, the ionomer resin may contain a constituent unit other than the constituent units (A), (B), (C) and (D) as another constituent unit, and may contain a constituent unit derived from, for example, a vinyl ester such as vinyl acetate or vinyl propionate.

The degree of neutralization in the ionomer resin in the present invention is, for example, 30% or more, but from the perspective of increasing stiffness, this degree of neutralization is preferably more than 40%, more preferably 42% or more, further preferably 45% or more, and yet more preferably 50% or more. By increasing the degree of neutralization in the ionomer resin, the bending stiffness, and especially the bending stiffness at 50°C, tends to increase. In addition, a decrease in stiffness at high temperature is less likely to occur even if thickness is increased by, for example, overlaying a plurality of interlayer films.

In addition, by including at least one of magnesium or zinc (and especially magnesium) in the constituent unit (B) and increasing the degree of neutralization in the present invention, far superior stiffness at 50°C tends to be achieved, and a decrease in stiffness at high temperature is far less likely to occur even if thickness is increased by, for example, overlaying a plurality of interlayer films.

In addition, the degree of neutralization in the ionomer resin is not particularly limited, but from the perspectives of improving the flexibility, adhesive properties, mechanical strength, processability, and so on, of the interlayer film, this degree of neutralization is preferably 95% or less, more preferably 90% or less, further preferably 80% or less, and yet more preferably 75% or less.

Moreover, the degree of neutralization in the ionomer resin indicates the proportion (%) of all carboxyl groups contained in the ionomer resin that are neutralized by metal ions.

The degree of neutralization in the ionomer resin can be determined from IR measurements before and after a hydrochloric acid treatment. A specific measurement method is as shown in the working examples section below.

In addition, content values of constituent units in the ionomer resin can be determined by carrying out mass spectrometry and $^1$H-NMR measurements and calculating from the degree of neutralization and integrated intensity ratios of hydrogen peaks derived from monomers.

From perspectives such as processability and mechanical strength, the melt flow rate (MFR) of the ionomer resin, as measured in accordance with JIS K7210: 1999 at a temperature of 190°C under a load of 2160 g, is, for example, from 0.01 g/10 min to 150 g/10 min inclusive, preferably from 0.01 g/10 min to 50 g/10 min inclusive, more preferably from 0.1 g/10 min to 30 g/10 min inclusive, and further preferably from 0.1 g/10 min to 10 g/10 min inclusive.

The content of the ionomer resin in the interlayer film is preferably 50 mass% or more, more preferably 70 mass% or more, further preferably 80 mass% or more, and yet more preferably 88 mass% or more, if the interlayer film as a whole is taken to be 100 mass%. If the content of the ionomer resin is the lower limit value mentioned above, it is possible to improve the stiffness, interlayer adhesive properties, and so on, of an obtained laminated glass.

In addition, the content of the ionomer resin in the interlayer film should be 100 mass% or less if the interlayer film as a whole is taken to be 100 mass%, but from the perspective of containing additives at a certain quantity or more, this content may be, for example, 99.99 mass% or less, or 99.9 mass% or less.

In addition, in a case where the interlayer film contains another resin component described later, the content of the ionomer resin in the interlayer film should be a certain content or lower, such as 98.4 mass% or less, 97.4 mass% or less, or 96.4 mass% or less.

The method for producing the ionomer resin is not particularly limited, and any well-known method can be used, such as subjecting monomer components to radical copolymerization at a high temperature and pressure to obtain an ethylene-unsaturated carboxylic acid-based copolymer, and then reacting said copolymer with a metal compound.

[Other resin components]

The interlayer film according to the first embodiment may contain other resin components in addition to the ionomer resin. In some cases, the ionomer resin becomes too viscous when kneaded, which leads to a decrease in moldability such as extrudability, but by containing another resin component in the interlayer film according to the first embodiment, moldability such as extrudability tends to be improved. The other resin component is preferably a resin that is compatible with the ionomer resin. From the perspective of compatibility with the ionomer resin, the other resin component is preferably an ethylene-unsaturated carboxylic acid-based copolymer. Here, unsaturated carboxylic acids used in the ethylene-unsaturated carboxylic acid-based copolymer are as described above, and of these, (meth)acrylic acid is preferred, and methacrylic acid is more preferred.

In addition, from the perspectives of compatibility and extrudability, the other resin component is preferably a copolymer of the same type as the copolymer used in the ionomer resin, and is more preferably a resin prior to neutralization with a metal ion, which is used in order to obtain the ionomer resin. Therefore, in a case where the ionomer resin is an ionomer resin of an ethylene-(meth)acrylic acid-based copolymer, the other resin component is preferably an ethylene-(meth)acrylic acid-based copolymer. In addition, in a case where the ionomer resin is an ionomer resin of an ethylene-methacrylic acid-based copolymer, the other resin component is preferably an ethylene-methacrylic acid-based copolymer.

The content of the other resin component is preferably from 1.5 mass% to 25 mass% inclusive if the interlayer film as a whole is taken to be 100 mass%. If the content of the other resin component is 1.5 mass% or more, the viscosity of the ionomer resin decreases and extrudability tends to improve. In addition, if the content of the other resin component is 25 mass% or less, it is possible to prevent a decrease in bending stiffness even if the other resin component is contained. The content of the other resin component is more preferably from 2.5 mass% to 18 mass% inclusive, and further preferably from 3.5 mass% to 11 mass% inclusive if the interlayer film as a whole is taken to be 100 mass%.

[Silane coupling agent]

The interlayer film may contain additives. For example, the interlayer film preferably contains a silane coupling agent as an additive. By containing a silane coupling agent, the interlayer film tends to exhibit improved adhesive properties to substrates, glass, and so on. Examples of the silane coupling agent include agents having: a functional group such as an amino group, an epoxy group or a group having a polymerizable carbon-carbon double bond, such as a vinyl group or a (meth)acryloyl group; and a hydrolyzable group such as an alkoxy group.

Examples of silane coupling agents having a polymerizable carbon-carbon double bond include vinyltrimethoxysilane, vinyltriethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropylmethyldimethoxysilane, 3-acryloxypropyltrimethoxysilane, 3-acryloxypropylmethyldiethoxysilane, and 3-acryloxypropyltriethoxysilane.

Examples of silane coupling agents having an amino group include N-(2-aminoethyl)-3-aminopropyltrimethoxysilane, N-(2-aminoethyl)-3-aminopropylmethyldimethoxysilane, N-(2-aminoethyl)-3-aminopropyltriethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane and N-(vinylbenzyl)-2-aminoethyl-3-aminopropyltrimethoxysilane hydroxide.

Examples of silane coupling agents having an epoxy group include 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, and 3-glycidoxypropyltriethoxysilane.

The interlayer film may contain one type of silane coupling agent alone, or two or more types thereof.

From the perspective of increasing adhesion to glass and substrates, the silane coupling agent is preferably a silane coupling agent having an amino group, and of these, a silane coupling agent having an ethylenediamine structure, such as N-(2-aminoethyl)-3-aminopropyltrimethoxysilane, is preferred.

From the perspective of improving adhesion to glass and substrates, the content of the silane coupling agent in the interlayer film is preferably from 0.001 mass% to 5 mass% inclusive, more preferably from 0.005 mass% to 2 mass% inclusive, further preferably from 0.01 mass% to 1 mass% inclusive, and yet more preferably from 0.05 mass% to 0.5 mass% inclusive, if the interlayer film as a whole is taken to be 100 mass%.

[Additives]

In addition to the silane coupling agents mentioned above, additives contained in the interlayer film may include ultraviolet radiation absorbers, antioxidants and other well-known additives. Examples of ultraviolet radiation absorbers include conventionally well-known ultraviolet radiation absorbers, such as compounds having a malonic acid ester structure, compounds having an oxalic acid anilide structure, compounds having a benzotriazole structure, compounds having a benzophenone structure, compounds having a triazine structure, compounds having a benzoate structure and compounds having a hindered amine structure. It is possible to use one of these ultraviolet radiation absorbers alone, or a combination of two or more types thereof. Ultraviolet radiation absorbers absorb ultraviolet radiation contained in sunlight and so on and prevent deterioration of the interlayer film caused by irradiation with sunlight and so on, thereby improving durability. The content of the ultraviolet radiation absorber in the interlayer film is preferably from 0.01 mass% to 3 mass% inclusive, more preferably from 0.05 mass% to 2 mass% inclusive, and further preferably from 0.1 mass% to 1.5 mass% inclusive, if the interlayer film as a whole is taken to be 100 mass%.

Examples of antioxidants include phenol-based compounds, phosphorus-based compounds and sulfur-based compounds. Antioxidants prevent oxidative degradation of the interlayer film, thereby improving durability. It is possible to use one of these antioxidants alone, or a combination of two or more types thereof.

The interlayer film of the present invention may contain well-known additives other than those mentioned above as additives, examples of which include plasticizers, photostabilizers, antistatic agents, surfactants, coloring agents, foaming agents, lubricants, crystal nucleating agents, crystallization promoters, crystallization retarding agents, catalyst deactivators, heat ray absorbers, heat ray reflectors, heat-dissipating agents, inorganic fillers, organic fillers, impact resistance improving agents, slipping agents, crosslinking agents, auxiliary crosslinking agents, tackifiers, processing aids, release agents, hydrolysis preventing agents, anti-blocking agents, anti-fogging agents, flame retardants, auxiliary flame retardants, light-diffusing agents, antimicrobial agents, anti-fungal agents and dispersing agents.

(Thickness)

The thickness of the interlayer film is not particularly limited, but is preferably from 0.2 m to 4 mm inclusive. When the thickness of the interlayer film is 0.2 mm or more, it is possible to improve the bending stiffness and adhesive properties of the interlayer film and improve the penetration resistance when the interlayer film is used in a laminated glass. In addition, when this thickness is 4 mm or less, the interlayer film can be produced using an ordinary method, and it is possible to prevent a decrease in bending stiffness at high temperature even if a plurality of interlayer films are overlaid. In addition, transparency of the interlayer film can also be ensured.

The thickness of the interlayer film is preferably 0.4 mm or more, and more preferably 0.6 mm or more. In addition, this thickness is more preferably 2.5 mm or less, further preferably 1.6 mm or less, and even more preferably 1.0 mm or less.

(Width)

The interlayer film according to the first embodiment preferably has a width of 1 m or more. When the interlayer film has a width of 1 m or more, the interlayer film can be advantageously used in a large sized laminated glass, a laminated glass for a building structure, and so on. In addition, when an interlayer film has a width of 1 m or more, industrial mass production becomes difficult, but by incorporating a resin other than the ionomer resin (for example, an ethylene-methacrylic acid-based copolymer or the like) in the interlayer film by means of a masterbatch or the like, the viscosity of the resin composition decreases, workability improves, and mass production becomes possible. The width of the interlayer film is more preferably 2 m or more. In addition, the interlayer film is not particularly limited, but is preferably 5 m or less, and more preferably 4 m or less, from the perspective of improving productivity.

In addition, the interlayer film according to the first embodiment is preferably an extrusion molded product obtained using extrusion molding described later. By being an extrusion molded product, even a large sized interlayer film having a width of 1 m or more, as mentioned above, can be mass-produced in an industrial manner. In addition, in the case of an extrusion molded product, productivity may decrease in some cases due to an increase in viscosity, but by incorporating a resin other than the ionomer resin (for example, an ethylene-methacrylic acid-based copolymer or the like) in the interlayer film by means of a masterbatch or the like, it is possible to suppress an increase in viscosity and prevent a decrease in productivity.

The interlayer film according to the first embodiment preferably comprises a single layer and is preferably constituted from a single layer film. The layer that constitutes the single layer film should comprise a resin composition having a composition described above. That is, the layer that constitutes the single layer film should comprise a resin composition which contains a resin such as the ionomer resin and which, if necessary, contains appropriate additives.

In addition, the interlayer film according to the first embodiment may also be a multilayer film having two or more layers. The composition of the entire interlayer film in the multilayer film may be as described for the interlayer film above, but the resin composition that constitutes each layer may have the composition described for the interlayer film above. That is, each layer should comprise a resin composition which contains a resin such as the ionomer resin and which, if necessary, contains appropriate additives, as described for the interlayer film above. In the multilayer film, the composition of each layer may be the same as, or different from, each other.

Moreover, in a single layer film or a multilayer film, the content of the ionomer resin, the content of the other resin component, and the content of additives in the resin composition that constitutes each layer should be as described above. However, content values of components mentioned above are based on 100 mass% of the interlayer film, but content values of components in the resin composition that constitutes each layer are based on 100 mass% of the resin composition instead of 100 mass% of the interlayer film.

[Method for producing interlayer film]

A resin composition for forming the interlayer film should be obtained, and the interlayer film should be formed from this resin composition. In a case where the interlayer film comprises a single component, this component (that is, a resin component such as an ionomer resin) should be heated and melted as appropriate and formed into a film by means of extrusion molding, press molding, roll molding, and so on, to form the interlayer film.

In addition, in a case where the resin composition comprises two or more components, a resin component and optionally blended components that constitute the interlayer film, such as additives, should be mixed to obtain a resin composition, and the obtained resin composition should be heated and melted as appropriate and formed into a film by means of extrusion molding, press molding, roll molding, and so on, to form the interlayer film. The method for mixing the components to obtain the resin composition is not particularly limited, but a method comprising kneading using an extruder is preferred.

In addition, in a case where the interlayer film comprises multiple layers, a resin composition for forming each layer should be prepared, each obtained resin composition should be heated and melted as appropriate and formed into a film by means of extrusion molding, press molding, roll molding, and so on, to form each layer, and these layers should be laminated to form the interlayer film. In a case where the interlayer film comprises multiple layers, the extrusion molding should be carried out by coextrusion.

The interlayer film is preferably formed by extrusion molding, as mentioned above. By using extrusion molding, a wide interlayer film can be efficiently produced.

In a preferred aspect, the present invention may produce an interlayer film using a so-called masterbatch. The masterbatch comprises a mixture (also referred to as mixture (A) hereinafter) obtained by mixing a resin component with additives, and an ionomer resin and/or a resin component other than the ionomer resin can be used as the resin component. The resin component other than the ionomer resin is preferably another resin component mentioned above, and is preferably an ethylene-(meth)acrylic acid-based copolymer. By using a masterbatch, additives can be easily mixed with the ionomer resin. In addition, by incorporating another resin component mentioned above, such as an ethylene-(meth)acrylic acid-based copolymer, in the mixture (A), the viscosity of the resin composition is effectively decreased and the resin composition can be easily kneaded using an extruder or the like.

Additives to be contained in the mixture (A) may be one or more types selected from among the additives mentioned above, and it is preferable to incorporate at least one type of silane coupling agent, ultraviolet radiation absorber or antioxidant, and other additives may be contained.

The form of the mixture (A) is not particularly limited, but is typically a particulate form such as a pellet.

In a case where a masterbatch is used, the interlayer film is preferably formed by extrusion molding. Therefore, in a preferred aspect, the method for producing the interlayer film may include a step (1) for kneading the ionomer resin and the mixture (A) to obtain a resin composition, and a step (2) for extruding the obtained resin composition.

In step (1), the mixing ratio of the mixture (A) relative to the ionomer resin (mixture (A)/ionomer resin) is preferably from 2/98 to 30/70 inclusive, more preferably from 3/97 to 20/70 inclusive, and further preferably from 4/96 to 12/88 inclusive in terms of mass ratio. If this mixing ratio falls within the range mentioned above, it is possible to blend suitable quantities of additives and another resin component such as an ethylene-(meth)acrylic acid-based copolymer in the resin composition.

In addition, the total content of additives in the mixture (A) is preferably from 1 mass% to 20 mass% inclusive, and more preferably from 2 mass% to 15 mass% inclusive, based on the total amount of the mixture (A).

When the total content of additives in the mixture (A) is not lower than the lower limit mentioned above, it is possible to blend suitable quantities of additives in the resin composition without mixing more than necessary of another resin component such as an ethylene-(meth)acrylic acid-based copolymer in the resin composition. In addition, when the content of additives in the mixture (A) is not higher than the upper limit mentioned above, the additives can be suitably dispersed in the mixture (A).

The interlayer film according to the first embodiment is preferably used by being disposed between a pair of substrates, and is more preferably used in a laminate or a laminated glass, as explained below. In addition, the interlayer film may be used for bonding a pair of substrates. It is particularly preferable for the interlayer film to be an interlayer film for laminated glass, which is used in a laminated glass.

<Laminate>

A laminate according to the present invention has the aforementioned interlayer film and a pair of substrates, with the interlayer film being disposed between the pair of substrates. In the laminate, the pair of substrates should be bonded via the interlayer film. In addition, in the laminate, the interlayer film disposed between the pair of substrates may be one interlayer film, but it is preferable for a plurality of interlayer films to be disposed between the pair of substrates. By disposing a plurality of interlayer films between the pair of substrates, even in a case where it is necessary to increase the thickness of the interlayer film disposed between a pair of glass members in a laminated glass for a building structure, or the like, this can be achieved using an interlayer film having an ordinary thickness. Moreover, the plurality of interlayer films should be integrated between the substrates, and the pair of substrates should be bonded via the integrated plurality of interlayer films.

The total thickness of interlayer films disposed between the substrates in the laminate is not particularly limited but is, for example, from 0.2 mm to 6 mm inclusive, preferably from 0.4 mm to 4.5 mm inclusive, and more preferably from 0.6 mm to 3.6 mm inclusive.

A separate layer may be provided between an interlayer film and a substrate, but it is preferable not to provide a separate layer and to dispose the interlayer film in direct contact with the substrate. In addition, in a case where a plurality of interlayer films are used, a separate layer may be provided between the plurality of interlayer films, but it is preferable not to provide a separate layer and to dispose the interlayer films in direct contact with each other.

Examples of substrates used in the laminate according to the first embodiment include resin films and glass members, but of these, glass members are preferred. By using glass members as the pair of substrates in the laminate, the laminate is a laminated glass.

Examples of resin films used in the substrates include (meth)acrylic resin films, polycarbonate films, polyester resin films such as poly(ethylene terephthalate) (PET) films and poly(ethylene naphthalate) (PEN) films, polyolefin resin films such as polyethylene films and polypropylene films, cyclic polyolefin (COP) films, triacetyl cellulose (TAC) films, polyether sulfone (PES) resin films and polyimide resin films. A resin film may comprise a single layer or be formed by laminating two or more layers. In addition, a functional layer such as a hard coat layer may be provided, as appropriate, on the surface of a resin film, and an electrode, a sensor, or the like, may be attached to the surface of a resin film.

The thickness of a resin film used in a substrate is not particularly limited, but is preferably 30 $\mu$m or more, and more preferably 50 $\mu$m or more, and is, for example, 1 mm or less, preferably 500 $\mu$m or less, and more preferably 450 $\mu$m or less.

In addition, a glass sheet may be used as a glass member. The glass sheet may be an inorganic glass or an organic glass, but an inorganic glass is preferred. The inorganic glass is not particularly limited, but examples thereof include clear glass, clear float glass, float plate glass, tempered glass, colored glass, polished plate glass, patterned glass, wire-reinforced plate glass, wired plate glass, ultraviolet radiation-absorbing plate glass, infrared radiation-reflecting plate glass, infrared radiation-absorbing plate glass and green glass.

In addition, glass known as resin glass is commonly used as organic glass, and this is not particularly limited, but examples include organic glass constituted from polycarbonate sheets, poly(methyl methacrylate) sheets, polyester sheets, and so on.

The two glass members may be formed from materials of the same type or from materials of different types. For example, it is possible for one glass member to be an inorganic glass and the other to be an organic glass, but it is preferable for both glass members to be inorganic glass or for both glass members to be organic glass.

The thickness of each glass member is not particularly limited, but is preferably from 0.5 mm to 5 mm inclusive, and more preferably from 0.7 mm to 3 mm inclusive.

<Laminated glass>

The laminated glass according to the first embodiment comprises a pair of glass members and an interlayer film disposed between the pair of glass members, as mentioned above. The glass members and the interlayer film can be similar to those described above. In the glass member, the interlayer film disposed between the pair of glass members may be a single interlayer film, but is preferably a plurality of interlayer films.

The laminated glass according to the first embodiment should satisfy at least one of requirement (A1) or requirement (B1) below. Requirement (A1): The slope (21c), which is obtained from (bending stiffness (2c) - bending stiffness (1c))/amount of change in thickness, is more than -10.

Requirement (B1): The slope (31c), which is obtained from (bending stiffness (3c) - bending stiffness (1c))/amount of change in thickness, is more than -10.

Here, bending stiffness (1c) is the bending stiffness [unit: N/mm] at 50°C of a laminated glass (1c) for measurement, which is obtained by bonding the pair of glass members via one interlayer film. The bending stiffness (2c) is the bending stiffness [unit: N/mm] at 50°C of a laminated glass (2c) for measurement, which is obtained by bonding the pair of glass members via two interlayer films. The bending stiffness (3c) is the bending stiffness [unit: N/mm] at 50°C of a laminated glass (3c) for measurement, which is obtained by bonding the pair of glass members via three interlayer films.

The amount of change in thickness is the amount of change [unit: mm] in the thickness of the interlayer films disposed between the pair of glass members during the measurement of the bending stiffness (3c) or the bending stiffness (2c) with respect to the thickness of the interlayer film disposed between the pair of glass members during the measurement of the bending stiffness (1c). Therefore, in requirement (A1), the amount of change in thickness is a value obtained by subtracting the thickness of one interlayer film during the measurement of the bending stiffness (1c) from the total thickness of two interlayer films during the measurement of the bending stiffness (2c). In addition, in requirement (B1), the amount of change in thickness is a value obtained by subtracting the thickness of one interlayer film during the measurement of the bending stiffness (1c) from the total thickness of three interlayer films during the measurement of the bending stiffness (3c).

If both the slope (21c) and the slope (31c) are -10 or lower in the laminated glass according to the first embodiment, it is not possible to achieve excellent bending stiffness at a high temperature close to 40°C. In particular, in a case where the thickness of interlayer films disposed between a pair of substrates (for example, a pair of glass members) is increased by laminating a plurality of interlayer films, it is not possible to achieve excellent bending stiffness at a high temperature in a laminated glass.

In the laminated glass according to the first embodiment, one of the slope (21c) or the slope (31c) should be more than -10, but is preferable for both the slope (21c) and the slope (31c) to be more than -10. If both the slope (21c) and the slope (31c) are more than -10, it is possible to reliably achieve excellent bending stiffness at a high temperature in a case where the thickness of interlayer films disposed between a pair of glass members is increased in a laminated glass.

From perspectives similar to those for the slope (21), the slope (21c) is preferably -9 or more, more preferably -4 or more, and further preferably 0 or more. The slope (21) is not particularly limited, but is preferably 50 or less, more preferably 30 or less, and further preferably 20 or less.

From perspectives similar to those for the slope (31), the slope (31c) is preferably -9 or more, more preferably -4 or more, and further preferably 0 or more. The slope (31c) is not particularly limited, but is preferably 50 or less, more preferably 30 or less, and further preferably 20 or less.

Moreover, in a case where the laminated glass according to the first embodiment is bonded via one interlayer film, this laminated glass is used as-is as a laminated glass (1c) for measurement, and separately, a laminated glass (2c) for measurement, which is obtained by bonding via two interlayer films, and a laminated glass (3c) for measurement, which is obtained by bonding via three interlayer films, should be produced. In addition, the bending stiffnesses (1c), (2c) and (3c) may be measured for the laminated glasses for measurement (1c), (2c) and (3c).

In addition, in a case where the laminated glass according to the first embodiment is bonded via two interlayer films, this laminated glass may be used as-is as a laminated glass (2c) for measurement, and separately, a laminated glass (1c) for measurement, which is obtained by bonding via one interlayer film, and a laminated glass (3c) for measurement, which is obtained by bonding via three interlayer films, should be produced. In addition, the bending stiffnesses (1c), (2c) and (3c) may be measured for the laminated glasses for measurement (1c), (2c) and (3c). The same applies to a case where the laminated glass according to the first embodiment is bonded via three interlayer films.

In a case where the laminated glass according to the first embodiment is bonded via four or more interlayer films, separately, a laminated glass (1c) for measurement, which is obtained by bonding via one interlayer film, a laminated glass (2c) for measurement, which is obtained by bonding via two interlayer films, and a laminated glass (3c) for measurement, which is obtained by bonding via three interlayer films, should be produced.

In addition, glass members used in the laminated glasses for measurement (1c), (2c) and (3c) are the same as glass members used in laminated glasses.

In addition, in the first embodiment, in a case where a laminated glass that satisfies at least one of requirement (A1) or requirement (B1) is one in which two glass members are bonded via a plurality of interlayer films, the plurality of interlayer films may have the same composition and the same features (for example, the plurality of interlayer films may all be single-layered and have the same composition, or may all be multi-layered, with each layer having the same composition and the same layer configuration and thickness ratio). In addition, the thickness of each of the plurality of interlayer films may be the same as, or different from, each other, but it is preferable for each of the plurality of interlayer films to have the same thickness.

A laminated glass that satisfies at least one of requirement (A1) or requirement (B1) preferably also satisfies at least one of requirement (C1) or requirement (D1) below.

Requirement (C1): The slope (21bc), which is obtained from (bending stiffness (2bc) - bending stiffness (1bc))/amount of change in thickness, is 0 or more.

Requirement (D1): The slope (31bc), which is obtained from (bending stiffness (3bc) - bending stiffness (1bc))/amount of change in thickness, is 0 or more.

Here, the bending stiffness (1bc) is the bending stiffness [unit: N/mm] at 25°C of the laminated glass (1c) for measurement. The bending stiffness (2bc) is the bending stiffness [unit: N/mm] at 25°C of the laminated glass (2c) for measurement. The bending stiffness (3bc) is the bending stiffness [unit: N/mm] at 25°C of the laminated glass (3c) for measurement.

In addition, the amount of change in thickness is the amount of change [unit: mm] in the thickness of the interlayer films disposed between the pair of glass members during the measurement of the bending stiffness (3bc) or the bending stiffness (2bc) with respect to the thickness of the interlayer film disposed between the pair of glass members during the measurement of the bending stiffness (1bc). Therefore, in requirement (C1), the amount of change in thickness is a value obtained by subtracting the thickness of one interlayer film during the measurement of the bending stiffness (1bc) from the total thickness of two interlayer films during the measurement of the bending stiffness (2bc). In addition, in requirement (D1), the amount of change in thickness is a value obtained by subtracting the thickness of one interlayer film during the measurement of the bending stiffness (1bc) from the total thickness of three interlayer films during the measurement of the bending stiffness (3bc).

In the laminated glass according to the first embodiment, it is more preferable for both the slope (21bc) and the slope (31bc) to be 0 or more. In addition, from perspectives similar to those for the slope (21b), the slope (21bc) is preferably 30 or more, more preferably 50 or more, further preferably 100 or more, and yet more preferably 200 or more, and although not particularly limited, is preferably 500 or less, more preferably 400 or less, and further preferably 300 or less.

From perspectives similar to those for the slope (31b), the slope (31bc) is preferably 30 or more, more preferably 50 or more, further preferably 100 or more, and yet more preferably 200 or more, and although not particularly limited, is preferably 500 or less, more preferably 400 or less, and further preferably 300 or less.

In the laminated glass according to the first embodiment, the bending stiffness at 50°C is preferably 700 N/mm or more. When the bending stiffness at 50°C of the laminated glass is 700 N/mm or more, the laminated glass tends to exhibit excellent stiffness in environments having relatively high temperatures of approximately 40-50°C. The bending stiffness at 50°C is preferably 800 N/mm or more, more preferably 850 N/mm or more, and further preferably 900 N/mm or more.

The bending stiffness of the laminated glass at 50°C should be high, but may be, for example, 3000 N/mm or less, 2000 N/mm or less, 1500 N/mm or less, or 1000 N/mm or less from the perspective of ensuring a certain degree of flexibility in the interlayer film.

The bending stiffness of the laminated glass at 25°C is preferably 900 N/mm or more. When the bending stiffness at 25°C of the laminated glass is 900 N/mm or more, the laminated glass tends to exhibit excellent stiffness in normal temperature environments. The bending stiffness at 25°C is preferably 1000 N/mm or more, more preferably 1100 N/mm or more, and further preferably 1200 N/mm or more.

The bending stiffness of the laminated glass at 25°C should be high, but may be, for example, 4000 N/mm or less, 3000 N/mm or less, 2300 N/mm or less, or 2000 N/mm or less from the perspective of imparting a certain degree of flexibility to the interlayer film.

(Methods for producing laminate and laminated glass)

The laminate according to the first embodiment can be produced by, for example, preparing a pair of substrates and one or more interlayer films, disposing one interlayer film or a plurality of overlaid interlayer films between the pair of substrates, and pressure bonding these.

The pressure bonding is not particularly limited, but pressure bonding while heating is preferred. In addition, it is possible to carry out preliminary bonding at a relatively low pressure and temperature, and then carry out main bonding by increasing the pressure and/or temperature beyond those used in the preliminary pressure bonding. Moreover, in a case where a plurality of interlayer films is disposed between the pair of substrates, the plurality of interlayer films may be integrated during the pressure bonding.

For example, in a case where the laminate is a laminated glass, one interlayer film or a plurality of interlayer films are sandwiched between two glass members and then passed through pressure rollers or placed in a rubber bag and subjected to vacuum suction so as to remove air remaining between the two glass members and the interlayer film. Preliminary bonding is then carried out at a temperature of approximately 70-110°C to obtain a laminated intermediate. Next, the laminated intermediate should be placed in an autoclave or pressed, and main bonding should be carried out by pressure bonding at a temperature of approximately 120-150°C and a pressure of 1-1.5 MPa. A laminated glass can be obtained in this way. Moreover, in a case where a plurality of interlayer films are disposed between a pair of glass members, the plurality of interlayer films may be integrated by the preliminary bonding and/or the main bonding.

The interlayer film, laminate and laminated glass according to the first embodiment can be used in a variety of fields, and can be used in electronic equipment such as displays, vehicles such as motor vehicles, railway cars, aircraft and ships, and various building structures such as buildings, condominiums, detached houses, halls and gymnasiums. Of these, the interlayer film, laminate and laminated glass according to the first embodiment are preferably used in vehicles and building structures, and of these, are more preferably used in building structures.

The laminated glass is preferably used in vehicles and building structures. In addition, in vehicles applications, the laminated glass may be used in windows, and may be used in, for example, windshields, rear windows and side windows of motor vehicles.

In building structures, the laminated glass may be used in windows, glass floors, curtain walls, and so on. When used in building structures, laminated glass may be, for example, made large in size and used for structural glazing, but in the present invention, the bending stiffness ratio mentioned above is relatively high, and the laminated glass can also be advantageously used in building structures.

<<Second embodiment>>

Next, for a second embodiment that is an embodiment of a first aspect of the present invention, differences from the first embodiment will be explained. In the first embodiment of the present invention, the interlayer film preferably satisfies at least one of requirement (A) or requirement (B), and preferably also satisfies at least one of requirement (C) or requirement (D). Furthermore, in the first embodiment of the present invention, the laminated glass should satisfy at least one of requirement (A1) or requirement (B1), and preferably also satisfies at least one of requirement (C1) or requirement (D1).

Conversely, an interlayer film according to the second embodiment of the present invention satisfies requirement (E) below instead of requirements (A) to (D) above, and preferably also satisfies requirement (F) below. In addition, a laminated glass according to the second embodiment of the present invention satisfies requirement (E1) below instead of requirements (A1) to (D1) above, and preferably also satisfies requirement (F1) below.

The second embodiment of the present invention will now be explained in detail. However, for other constituent elements that are omitted from explanations given below, such as features of the interlayer film, laminate and laminated glass structure, features similar to those in the first embodiment can be used, and methods for producing these can also be similar to those in the first embodiment.

[Interlayer film according to second embodiment]

An interlayer film according to the second embodiment of the present invention is an interlayer film that satisfies requirement (E) below.

Requirement (E): The slope (21a), which is obtained from (bending stiffness (2a) - bending stiffness (1))/amount of change in thickness, is more than -10.

Here, bending stiffness (1) is the bending stiffness [unit: N/mm] at 50°C of a laminated glass (1) for measurement, which is obtained by bonding two sheets of glass having a thickness of 2.75 mm via one interlayer film. The bending stiffness (2a) is the bending stiffness [unit: N/mm] at 50°C of a laminated glass (2a) for measurement, which is obtained by bonding two sheets of glass having a thickness of 2.75 mm via one interlayer film (2a) which has a different thickness from the aforementioned interlayer film.

It should be noted that an example of the "one interlayer film (2a) which has a different thickness from the aforementioned interlayer film" is one obtained by slicing so as to make the thickness less than that of the original interlayer film (that is, a reference interlayer film). In addition, another example is a single interlayer film obtained by pressure bonding a plurality of (for example, two or three) reference interlayer films. Furthermore, this interlayer film has a different thickness from the reference interlayer film, but may have the same composition and the same features (for example, interlayer films may all be single-layered and have the same composition, or may all be multi-layered, with each layer having the same composition and the same layer configuration and thickness ratio).

In the present embodiment, if features of the interlayer film, such as the composition of the interlayer film, are the same as those described above, because the bending stiffness of a laminated glass at 50°C and the thickness of an interlayer film have a substantially proportional relationship, the determined slope (21a) will be substantially the same even if the thickness of the interlayer film (2a) is arbitrarily adjusted in the manner described above.

However, from the perspective of calculating the slope (21a) with less error, the difference in thickness between the "one interlayer film (2a) which has a different thickness from the aforementioned interlayer film" and the reference interlayer film is preferably 100 μm or more, and more preferably 200 μm or more. In addition, the difference between the thickness of the interlayer film (2a) and the thickness of the reference interlayer film is preferably 2000 μm or less, and more preferably 1600 μm or less.

In addition, the amount of change in thickness in requirement (E) is the amount of change [unit: mm] in the thickness of the interlayer film disposed between the pair of glass sheets during the measurement of the bending stiffness (2a) with respect to the thickness of the interlayer film disposed between the pair of glass sheets during the measurement of the bending stiffness (1). That is, in requirement (E), the amount of change in thickness is a value obtained by subtracting the thickness of the interlayer film during the measurement of the bending stiffness (1) from the thickness of the interlayer film during the measurement of the bending stiffness (2a).

If the slope (21a) is -10 or lower in the interlayer film, it is not possible to achieve excellent bending stiffness at a high temperature close to 40°C. In particular, in a case where the thickness of an interlayer film disposed between a pair of substrates (for example, a pair of glass members) is increased, it is not possible to achieve excellent bending stiffness at a high temperature close to 40°C in a laminate such as a laminated glass produced using the interlayer film according to the present embodiment.

The slope (21a) is preferably -9 or more, more preferably -4 or more, and further preferably 0 or more. If the slope (21a) is higher, it is easier to prevent a decrease in bending stiffness at high temperature, and in particular, it is easier to prevent a decrease in bending stiffness at high temperature in a case where the thickness of interlayer films disposed between a pair of substrates (for example, glass members) is higher. The slope (21a) is not particularly limited, but is preferably 50 or less, more preferably 30 or less, and further preferably 20 or less from the perspective of readily imparting the interlayer film with flexibility, adhesive properties, and so on.

The interlayer film according to the second embodiment preferably satisfies requirement (F) below in addition to requirement (E) above.

Requirement (F): The slope (21ab), which is obtained from (bending stiffness (2ab) - bending stiffness (1b))/amount of change in thickness, is 0 or more.

Here, the bending stiffness (1b) is the bending stiffness [unit: N/mm] at 25°C of the laminated glass (1) for measurement. The bending stiffness (2ab) is the bending stiffness [unit: N/mm] at 25°C of the laminated glass (2a) for measurement.

In addition, the amount of change in thickness is the amount of change [unit: mm] in the thickness of the interlayer film disposed between the pair of glass sheets during the measurement of the bending stiffness (2ab) with respect to the thickness of the interlayer film disposed between the pair of glass sheets during the measurement of the bending stiffness (1b). Therefore, in requirement (F), the amount of change in thickness is a value obtained by subtracting the thickness of the interlayer film during the measurement of the bending stiffness (1b) from the thickness of the interlayer film (2a) during the measurement of the bending stiffness (2ab).

If the slope (21ab) is 0 or more, it is possible to achieve excellent bending stiffness close to normal temperature in the interlayer film according to the present embodiment. The slope (21ab) is preferably 30 or more, more preferably 50 or more, and further preferably 100 or more, and although not particularly limited, the slope (21ab) is preferably 500 or less, more preferably 400 or less, and further preferably 300 or less.

[Laminated glass according to second embodiment]

A laminated glass according to the second embodiment is a laminated glass in which a pair of glass members are bonded via an interlayer film disposed between the pair of glass members, and should be a laminated glass that satisfies requirement (E1) below.

Requirement: the slope (21ac), which is obtained from (bending stiffness (2ac) - bending stiffness (1ac))/amount of change in thickness, is more than -10.

Here, the bending stiffness (1ac) is the bending stiffness [unit: N/mm] at 50°C of the laminated glass according to the present embodiment. The bending stiffness (2ac) is the bending stiffness [unit: N/mm] at 50°C of a laminated glass (2ac) for measurement, which is obtained by bonding the pair of glass members via one interlayer film (2ac) which has a different thickness from the aforementioned interlayer film.

The amount of change in thickness is the amount of change [unit: mm] in the thickness of the interlayer film disposed between the pair of glass members during the measurement of the bending stiffness (2ac), with respect to the thickness of the interlayer film disposed between the pair of glass members during the measurement of the bending stiffness (1ac). Therefore, in requirement (E1), the amount of change in thickness is a value obtained by subtracting the thickness of the interlayer film during the measurement of the bending stiffness (1ac) from the thickness of the interlayer film during the measurement of the bending stiffness (2ac).

It should be noted that the "one interlayer film (2ac) which has a different thickness from the aforementioned interlayer film" is defined in the same way as the "one interlayer film (2a) which has a different thickness from the aforementioned interlayer film", which is explained in the second embodiment, and the difference between the thickness of the interlayer film (2ac) and the thickness of the reference interlayer film is also as explained for the "one interlayer film (2a) which has a different thickness from the aforementioned interlayer film".

In addition, glass members used in the laminated glass (2ac) for measurement are the same as glass members used in laminated glasses.

From perspectives similar to those for the slope (21a), the slope (21ac) should be more than -10, but is preferably -9 or more, more preferably -4 or more, and further preferably 0 or more, and is preferably 50 or less, more preferably 30 or less, and further preferably 20 or less.

The laminated glass according to the second embodiment preferably satisfies requirement (F1) below in addition to requirement (E1) above.

Requirement (F1): The slope (21abc), which is obtained from (bending stiffness (2abc) - bending stiffness (1bc))/amount of change in thickness, is 0 or more.

Here, the bending stiffness (1bc) is the bending stiffness [unit: N/mm] at 25°C of the laminated glass according to the present embodiment. The bending stiffness (2abc) is the bending stiffness [unit: N/mm] at 25°C of the laminated glass (2ac) for measurement. In addition, the amount of change in thickness is the amount of change [unit: mm] in the thickness of the interlayer film disposed between the pair of glass members during the measurement of the bending stiffness (2abc) with respect to the thickness of the interlayer film disposed between the pair of glass members during the measurement of the bending stiffness (1bc). Therefore, in requirement (F1), the amount of change in thickness is a value obtained by subtracting the thickness of the interlayer film during the measurement of the bending stiffness (1bc) from the thickness of the interlayer film during the measurement of the bending stiffness (2abc).

If the slope (21abc) is 0 or more, it is possible to achieve excellent bending stiffness close to normal temperature in the laminated glass of the present invention. The slope (21abc) is preferably 30 or more, more preferably 50 or more, and further preferably 100 or more, and although not particularly limited, the slope (21abc) is preferably 500 or less, more preferably 400 or less, and further preferably 300 or less.

<<Third embodiment>>

Next, a third embodiment, which is an embodiment of a second aspect of the present invention, will be explained in detail.

<Bending stiffness>

In an interlayer film according to the third embodiment of the present invention, the ratio of the bending stiffness at 50°C relative to the bending stiffness at 25°C of a laminated glass for measurement, which is obtained by bonding two sheets of glass having a thickness of 2.75 mm via an interlayer film, is 0.5 or more. In the third aspect of the present invention, if the bending stiffness ratio described above is less than 0.5, it is difficult to achieve excellent stiffness in environments at temperatures of 20-40°C. Therefore, this aspect is unsuitable for use in large size laminated glass, structural glazing, and so on.

From the perspective of readily increasing stiffness in environments at temperatures of 20-40°C, the bending stiffness ratio described above is preferably 0.52 or more, more preferably 0.55 or more, further preferably 0.56 or more, and yet more preferably 0.60 or more. In addition, because the bending stiffness of the laminated glass for measurement described above generally decreases as the temperature increases, the bending stiffness ratio described above is, for example, 1 or less. From the perspective of enhancing air removal properties during production of a laminated glass, this bending stiffness ratio is, for example, 0.9 or less, and may be 0.8 or less or 0.7 or less.

Specific values for the bending stiffness at 50°C and the bending stiffness at 25°C of the interlayer film in the present embodiment are as explained in relation to the bending stiffness at 50°C and the bending stiffness at 25°C of the laminated glass (1) for measurement, which relates to the interlayer film of the first embodiment, and explanations of these are omitted here.

As mentioned above in relation to the first embodiment, the bending stiffness can be adjusted by altering the type of resin, the composition of monomers that constitute the resin, the glass transition temperature (Tg) of the interlayer film or the thickness of the interlayer film. Furthermore, for example, bending stiffness tends to increase if an ionomer resin is used, and if a high Tg component is used as a monomer that constitutes the ionomer resin, while the amount of a low Tg component is reduced, or the degree of neutralization is increased, and the bending stiffness ratio mentioned above also tends to increase. In addition, in a case where another resin component is used in addition to the ionomer resin, by reducing the content of the other resin component, high bending stiffness tends to be maintained. Furthermore, if the interlayer film is made thicker, the absolute value of bending thickness (and especially bending thickness at normal temperature) tends to increase, but the bending stiffness ratio mentioned above tends to decrease.

The bending stiffness at 25°C or 50°C in the third embodiment can be measured using a method similar to that used for the bending stiffness at 50°C and the bending stiffness at 25°C of the laminated glass (1) for measurement, which is explained in the first embodiment.

<Glass transition temperature>

The interlayer film of the third embodiment, like the interlayer film of the first embodiment, preferably has a glass transition temperature (Tg) of from 50°C to 75°C inclusive. If the interlayer film has a Tg value of 50°C or higher, the bending stiffness at 50°C tends to increase and the bending stiffness ratio tends to increase. In addition, if the Tg value is 75°C or lower, the interlayer film tends to be imparted with a certain degree of flexibility. In addition, air removal properties during production of a laminated glass tend to improve.

The glass transition temperature (Tg) of the interlayer film is more preferably 55°C or higher, further preferably 58°C or higher, and yet more preferably 60°C or higher from the perspective of being able to further increase the bending stiffness ratio. In addition, the glass transition temperature (Tg) of the interlayer film is more preferably 73°C or lower, and further preferably 71°C or lower from perspectives such as flexibility and adhesive properties. Methods for adjusting and measuring glass transition temperature are as described in the first embodiment.

The interlayer film of the third embodiment should contain a resin. The resin used in the interlayer film is preferably a thermoplastic resin. By using a thermoplastic resin in the interlayer film, a pair of substrates or a pair of glass sheets can be easily bonded via the interlayer film by means of thermo-compression bonding. In addition, examples of the resin used in the interlayer film include poly(vinyl acetal) resins, ethylene-vinyl acetate copolymer resins, ionomer resins, polyurethane resins and thermoplastic elastomers, but of these, ionomer resins are preferred. By using an ionomer resin, the bending stiffness at 25°C tends to increase, and by adjusting the monomer composition and so on in the ionomer resin in the manner described later, the bending stiffness ratio tends to increase and excellent bending stiffness tends to be achieved at 20-40°C.

The ionomer resin, including detailed explanations of the content thereof, production method, and so on, are as described in the first embodiment above, and explanations of these are given in detail.

The interlayer film of the third embodiment may contain other resin components in addition to the ionomer resin, and may contain a silane coupling agent and additives other than a silane coupling agent. Details of these are as described in the first embodiment above. In addition, other features of the interlayer film and the method for producing the interlayer film are similar to those in the first embodiment, and explanations of these are therefore omitted.

<Laminate>

A laminate according to the third embodiment of the present invention has the aforementioned interlayer film and a pair of substrates, with the interlayer film being disposed between the pair of substrates. In the laminate, the pair of substrates should be bonded via the interlayer film. In addition, in the laminate, the interlayer film disposed between the pair of substrates may be one interlayer film, but a plurality of interlayer films may be disposed between the pair of substrates.

Details of the laminate according to the third embodiment are similar to those of the third embodiment, and explanations of these are therefore omitted.

<Laminated glass>

The laminated glass according to the third embodiment of the present invention comprises a pair of glass members and an interlayer film disposed between the pair of glass members. The glass members and the interlayer film can be similar to those described above. In the glass member, the interlayer film disposed between the pair of glass members may be a single interlayer film, but may also be a plurality of interlayer films.

In one aspect of the third embodiment, the ratio of the bending stiffness at 50°C relative to the bending stiffness at 25°C of the laminated glass is 0.5 or more. In the present invention, if the bending stiffness ratio of the laminated glass is less than 0.5, it is difficult to achieve excellent stiffness in environments at temperatures of 20-40°C. Therefore, this aspect is unsuitable for use in large size laminated glass, structural glazing, and so on. From the perspective of readily increasing stiffness in environments at temperatures of 20-40°C, the bending stiffness ratio of the laminated glass is more preferably 0.52 or more, further preferably 0.56 or more, and yet more preferably 0.60 or more. In addition, because bending stiffness generally decreases as temperature increases, the bending stiffness ratio described above is, for example, 1 or less, but may be, for example, 0.9 or less, 0.8 or less, or 0.7 or less.

Specific values for the bending stiffness at 50°C and the bending stiffness at 25°C of the laminated glass in the third embodiment are as explained in the first embodiment above.

Methods for producing the laminate and laminated glass in the third embodiment are as described in the first embodiment.

In addition, the interlayer film, laminate and laminated glass according to the third embodiment of the present invention can be used in a variety of fields, and these details are as explained in the first embodiment.

The present invention has been explained above with reference to the first to third embodiments, but features explained for the first to third embodiments may be combined as appropriate as long as the advantageous effect of the present invention is achieved. Working Examples

The present invention will now be explained in greater detail through the use of working examples, but is in no way limited to these examples.

Explanations will first be given of working examples and comparative examples according to first and second embodiments of the present invention. It should be noted that measurements and evaluations of physical properties were carried out in the manner described below.

[Thickness of interlayer film]

The thickness of interlayer films was measured as a 10-point average using an "DSX500" microscope produced by Olympus Corp.

[Content and degree of neutralization of constituent units]

Mass percentages of constituent units in ethylene-(meth)acrylic acid-based copolymers and ionomer resins thereof were determined by carrying out a hydrochloric acid treatment described below and then carrying out $^1$H-NMR and IR measurements.

[Hydrochloric acid treatment]

500 $\mu$L of ethanol and 1 mL of hydrochloric acid were added to 100 mg of a frozen pulverized sample using a JFC-2000 (produced by Japan Analytical Industry Co., Ltd.), and stirred for 48 hours at 60°C. The sample was then washed three times with ultrapure water to remove hydrochloric acid, and then dried by being heated.

[Degree of neutralization]

The degree of neutralization was determined by subjecting the sample to IR measurements before and after the hydrochloric acid treatment. The degree of neutralization was calculated using the formula shown below from the height of a carboxylic acid peak at 1700 cm-1 based on the height of a methylene peak at 1460 cm-1 before and after the hydrochloric acid treatment. It should be noted that in the formula shown below, the denominator shows the peak height at 1700 cm$^{-1}$/peak height at 1460 cm$^{-1}$ ratio of the sample after the hydrochloric acid treatment, and the numerator shows the peak height at 1700 cm$^{-1}$/peak height at 1460 cm$^{-1}$ ratio of the sample before the hydrochloric acid treatment.

[Numerical Formula 1]

$$\text{Degree of neutralization} = 100 \times \left( 1 - \frac{\text{Before hydrochloric acid treatment}\ \ 1700\text{cm}^{-1}/1460\text{cm}^{-1}}{\text{After hydrochloric acid treatment}\ \ 1700\text{cm}^{-1}/1460\text{cm}^{-1}} \right)$$

[$^1$H-NMR measurements]

A measurement solution was prepared by dissolving a sample following the hydrochloric acid treatment at a concentration of approximately 1-3 mass% in a solvent (tetrachloroethane:dimethyl sulfoxide = 5:2). The measurement solution was subjected to $^1$H-NMR measurements (apparatus: AVANCE 400 (PRODIGY); spectrometer: AVANCE III HD). Measurement conditions comprised eight accumulations and a temperature of 120°C. In the analysis, the integral value of H derived from a methyl group in methacrylic acid was set as a reference value, with that value being 3.00. In this case, content values for the total mass percentage of the constituent units (A) and (B) and the mass percentage of the constituent unit (C) derived from ethylene were calculated from the integrated intensity ratio of H peaks derived from methylene that appeared at 1.15-1.62 ppm. Furthermore, content values of each of the constituent units (A) and (B) were calculated from the degree of neutralization mentioned above.

[Glass transition temperature (Tg)]

Interlayer films obtained in working examples and comparative examples were cut to a length of 10 mm and a width of 5 mm, and viscoelasticity was measured under the following measurement conditions using a dynamic viscoelasticity measurement apparatus ("ARES-G2" produced by TA Instruments). A sample was placed under conditions of 100°C, viscoelasticity was measured as the temperature was lowered, and peak temperatures of loss tangent tanδ, which were obtained from these measurement results, were read. Among these peak temperatures in the temperature range 0-100°C, the peak temperature at which tanδ was a maximum was taken to be the glass transition temperature. In addition, table 2 shows tanδ values as well as glass transition temperatures.

(Measurement conditions)

Deformation form: shear mode; measurement temperature: temperature decrease from 100°C to 0°C; temperature decrease rate: 3°C/min; measurement frequency: 1 Hz; strain: 1%; 8 mm parallel plates

[Bending stiffness]

The bending stiffness of a laminated glass was evaluated using a test method shown schematically in FIG. 1. A "5965 universal testing machine" produced by Instron, which was equipped with a three-point bending test jig, was used as a measurement apparatus. With regard to measurement conditions, the distance D1 between supporting points was 13.2 cm, the sample length D2 was 20 cm, the sample width was 8 cm, deformation was applied to the laminated glass 20 in the direction shown by F at a displaced rate of 1 mm/min, stress was measured when the displacement reached 0.6 mm or when a force of 500 N was applied, and the bending stiffness was calculated. Data for an indentation depth of 0.2 mm or more was used when calculating the bending stiffness. The bending stiffness was measured in environments at 25°C, 30°C, 40°C and 50°C. Three samples were prepared for each level, the bending stiffness of each sample was measured, and the arithmetic mean value of the three values was used. Moreover, an "H30001A" refrigerator type high-low temperature constant temperature bath produced by Mita Sangyo was used to adjust the temperature.

It should be noted that after being produced, the laminated glasses obtained in the working examples and comparative examples were aged by being left for 1 week in an environment at a temperature of 23°C and a relative humidity of 50%, after which the bending stiffness was measured.

(Slope)

The slope (21), slope (31), slope (21b) and slope (31b) were determined using methods described in the description on the basis of the thickness and bending stiffness values at 25°C and 50°C of an obtained laminated glass. In addition, cases where one of the slope (21) or the slope (31) was more than -10 in the working examples and comparative examples were deemed to be "OK" in terms of thickness dependency of bending stiffness (25-50°C), and cases where the slope (21) and the slope (31) were both -10 or less were deemed to be "NG".

(Rate of decrease in bending stiffness)

The rate of decrease in bending stiffness was determined from bending stiffness values of a laminated glass at 25°C and 50°C and evaluated for each working example and comparative example. The rate of decrease in bending stiffness was calculated using the following formula.

Rate of decrease (%) in bending stiffness = [(bending stiffness at 25°C - bending stiffness at 50°C)/bending stiffness at 25°C]×100

Details of ionomer resins and resins used in masterbatches in working examples and comparative examples are as follows. It should be noted that details of ionomer resins and resins used in masterbatches in working examples and comparative examples in the third embodiment described later are also as follows.

[Table 1]

| | | Ionomer 1 | Ionomer 2 | Ionomer 3 | Ionomer 4 | Ionomer 5 | Resin (MB) |
|---|---|---|---|---|---|---|---|
| Metal | - | Mg | Mg | Zn:Mg =3.7 | Na | Na | - |
| Degree of neutralization | % | 70.0 | 46.2 | 429 | 52 | 73 | 0.0 |
| Constituent unit (C) derived from ethylene | wt% | 82.8 | 82.8 | 82.8 | 79.8 | 85.6 | 82.8 |
| Total amount of constituent units (A) and (B) | wt% | 17.2 | 17.2 | 17.2 | 20.2 | 14.4 | 17.2 |
| Constituent unit derived from isobutyl (meth)acrylate | wt% | 0 | 0 | 0 | 0 | 0 | 0 |
| Constituent unit (A) derived from (meth)acrylic acid | wt% | 5.2 | 9.3 | 9.8 | 9.7 | 3.9 | 17.2 |
| Constituent unit (B) derived from neutralized product | wt% | 12.0 | 7.9 | 7.4 | 10.5 | 10.5 | 0.0 |

※ Ionomers 1 and 2 are ionomer resins obtained by neutralizing an ethylene-methacrylic acid-based copolymer with magnesium ions.

※ Ionomer 3 is an ionomer resin obtained by neutralizing an ethylene-methacrylic acid-based copolymer with zinc ions and magnesium ions. The mass ratio of zinc ions and magnesium ions is 3:7.

※ Ionomers 4 and 5 are ionomer resins obtained by neutralizing an ethylene-methacrylic acid-based copolymer with sodium ions.

※ Resin (MB) is an ethylene-(meth)acrylic acid-based copolymer used in a masterbatch (mixture (A)).

[Production of masterbatch (mixture (A))]

100 parts by mass of an ethylene-(meth)acrylic acid-based copolymer was blended with 2 parts by mass of an ultraviolet radiation absorber and 0.1 parts by mass of a silane coupling agent as additives, kneaded, and pelletized using a strand cutting method to produce a pellet-like masterbatch (mixture (A)). The ultraviolet radiation absorber and silane coupling agent used in the masterbatch are as follows.

Ultraviolet radiation absorber: Tinuvin 234 produced by BASF Silane coupling agent: KBM-602; produced by Shin-Etsu Chemical Co., Ltd.; N-2-(aminoethyl)-3-aminopropylmethyldimethoxysilane

[Working Example 1A]

(Preparation of interlayer film)

95 parts by mass of an ionomer 1 and 5 parts by mass of a masterbatch were placed in an extruder, kneaded at 170°C, and extruded to obtain an interlayer film having a thickness of 0.76 mm and a width of 1 m.

(Preparation of laminated glass)

Two glass sheets (length 20 cm × width 8 cm × thickness 2.75 mm; float plate glass (produced by Sanshiba Shozai Kabushiki Kaisha)) and an interlayer film according to Working Example 1A (length 20 cm × width 8 cm) were prepared, and a laminated intermediate was obtained by sandwiching one interlayer film between the two sheets of the float plate glass. This laminated intermediate was placed in a rubber bag, the bag was deaerated for 20 minutes at a degree of vacuum of 0.08 MPa, transferred to an oven while still deaerated, and vacuum pressed while maintaining a temperature of 90°C for 30 minutes so as to temporarily pressure bond the laminated intermediate. The temporarily pressure bonded laminated intermediate was then pressure bonded for 20 minutes in an autoclave at a temperature of 140°C and a pressure of 1.3 MPa, thereby obtaining a laminated glass (1) in which two sheets of glass were bonded by the interlayer film (thickness 0.76 mm).

Two interlayer films were sandwiched between two sheets of float plate glass, and a laminated glass (2), in which two sheets of glass were bonded by the integrated interlayer film (thickness 1.52 mm), was obtained under similar production conditions. In addition, three interlayer films were sandwiched between two sheets of float plate glass, and a laminated glass (3), in which two sheets of glass were bonded by the integrated interlayer film (thickness 2.28 mm), was obtained under similar production conditions.

The bending stiffnesses of the obtained laminated glasses (1), (2) and (3) were measured, and the slopes (21), (31), (21b) and (31b) were calculated from the measured bending stiffness values and the thicknesses of the interlayer films in the laminated glasses. The rate of decrease (%) in bending stiffness was determined for each of the laminated glasses. The results are shown in Table 2.

[Working Example 2A]

(Preparation of interlayer film)

Ionomer 2 was placed in an extruder, kneaded at 170°C, and extruded to obtain an interlayer film having a thickness of 0.76 mm and a width of 1 m. A laminated glass was prepared from the obtained interlayer film using a method similar to that used in working Example 1A, and the bending stiffness, slopes (21), (31), (21b) and (31b), and rate of decrease (%) in bending stiffness were determined.

[Working Example 3A]

This working example was carried out in the same way as in Working Example 2A, except that ionomer 3 was used instead of ionomer 2.

[Comparative Example 1A]

A laminated glass was prepared using a method similar to that used in working Example 1A, except that a poly(vinyl butyral) resin sheet (DG-41 produced by Eastman) was used, and the bending stiffness, slopes (21), (31), (21b) and (31b), and rate of decrease (%) in bending stiffness were determined.

[Comparative Examples 2A and 3A]

These comparative examples were carried out in the same way as in Working Example 2A, except that ionomers 4 and 5 were used instead of ionomer 2.

[Table 2]

| | | Working Example 1A | Working Example 2A | Working Example 3A | Comparative Example 1A | Comparative Example 2A | Comparative Example 3A |
|---|---|---|---|---|---|---|---|
| Type of resin | | Ionomer 1 | Ionomer 2 | Ionomer 3 | PVB | Ionomer 4 | Ionomer 5 |
| Metal | | Mg | Mg | Zn:Mg | - | Na | Na |
| Masterbatch [wt%] | | 5 | 0 | 0 | 0 | 0 | 0 |
| Tg[°C] | | 63.9 | 69.4 | 69.7 | 43.1 | 46.6 | 47.4 |
| tan $\delta$ | | 0.66 | 0.58 | 0.56 | 1.73 | 0.64 | 0.69 |
| 25°C Bending stiffness [N/mm] | 1 sheet (0.76mm) | 1493 | 1479 | 1430 | 986 | 1535 | 1463 |
| | 2 sheet (1.52mm) | 1695 | 1667 | 1604 | 984 | 1750 | 1658 |
| | 3 sheets (2.28mm) | 1897 | 1855 | 1778 | 981 | 1965 | 1861 |

(continued)

| | | Working Example 1A | Working Example 2A | Working Example 3A | Comparative Example 1A | Comparative Example 2A | Comparative Example 3A |
|---|---|---|---|---|---|---|---|
| 30°C Bending stiffness [N/mm] | 1 sheet (0.76mm) | 1449 | 1432 | 1393 | 466 | 1430 | 1363 |
| | 2 sheets (1.52mm) | 1616 | 1597 | 1537 | 447 | 1571 | 1511 |
| | 3 sheet (2.28mm) | 1783 | 1762 | 1680 | 428 | 1711 | 1662 |
| 40°C Bending stiffness [N/mm] | 1 sheet (0.76mm) | 1212 | 1270 | 1207 | 399 | 954 | 1016 |
| | 2 sheets ( 1.52mm) | 1287 | 1367 | 1274 | 389 | 950 | 1014 |
| | 3 sheets (2.28mm) | 1362 | 1465 | 1340 | 379 | 947 | 1055 |
| 50°C Bending stiffness [N/mm] | 1 sheet (0.76mm) | 953 | 984 | 891 | 390 | 648 | 650 |
| | 2 sheets (1.52mm) | 956 | 987 | 888 | 383 | 634 | 615 |
| | 3 sheets (2.28mm) | 960 | 991 | 885 | 375 | 619 | 632 |
| Thickness dependency of bending stiffness at 25°C: inclination (21b) | | 266 | 247 | 229 | -3 | 283 | 256 |
| Thickness dependency of bending stiffness at 25°C: incination (31b) | | 266 | 247 | 229 | -3 | 283 | 262 |
| Thickness dependency of bending stiffness at 50°C: inclination (21) | | 4 | 5 | -4 | -10 | -19 | -46 |
| Thickness dependency of bending stiffness at 50°C: inclination (31) | | 4 | 5 | -4 | -10 | -19 | -12 |
| Thickness dependency of bending stiffness (25 ~ 50°C) | | OK | OK | OK | NG | NG | NG |

(continued)

| | | Working Example 1A | Working Example 2A | Working Example 3A | Comparative Example 1A | Comparative Example 2A | Comparative Example 3A |
|---|---|---|---|---|---|---|---|
| 25→50°C Rate of decrease (%) in bending stiffness | 1 sheet(0.76mm) | 36 | 34 | 38 | 60 | 58 | 56 |
| | 2 sheets (1 .52mm) | 44 | 41 | 45 | 61 | 64 | 63 |
| | 3 sheets (2.28mm) | 49 | 47 | 50 | 62 | 69 | 66 |

※ The slope (21) calculated in the working examples and comparative examples is also slope (21a), slope (21c) and slope (21ac).

※ The slope (31) calculated in the working examples and comparative examples is also slope (21a), slope (31c) and slope (21ac).

※ The slope (21b) calculated in the working examples and comparative examples is also slope (21bc), slope (21ab) and slope (21abc).

※ The slope (31b) calculated in the working examples and comparative examples is also slope (31bc), slope (21ab) and slope (21abc) .

In laminated glasses obtained using one, two or three interlayer films in the working examples above, because the slope (21) and slope (31), which were determined from the bending stiffness at 50°C and the thickness of the interlayer film, were more than - 10, the rate of decrease of the bending stiffness at 50°C relative to the bending stiffness at 25°C was lower, and excellent bending stiffness at high temperature could be achieved. This tendency was also similar for laminated glasses in which the thickness of interlayer films disposed between a pair of glass members was increased by overlaying a plurality of interlayer films between the glass members.

Conversely, because the slope (21) and the slope (31) in the comparative examples were -10 or less, the rate of decrease of the bending stiffness at 50°C relative to the bending stiffness at 25°C was higher, and excellent bending stiffness at high temperature could not be achieved. This tendency was also similar for cases where one interlayer film was disposed between a pair of glass substrates and cases where a plurality of interlayer films were disposed between a pair of glass substrates.

Explanations will now be given of working examples and comparative examples according to the third embodiment of the present invention. It should be noted that physical property measurements were similar to those described above. Moreover, bending stiffness measurements were carried out in environments at 25°C and 50°C using methods similar to those described above, the ratio of the bending stiffness at 50°C relative to the bending stiffness at 25°C was calculated, and a case where this ratio was 0.5 or more was deemed to be "OK" and a case where this ratio was less than 0.5 was deemed to be "NG".

[Evaluations]

The bending stiffness in an environment at 40°C was measured in the same way as the method for measuring bending stiffness described above.

Details of the ionomer resin, the resin used in a masterbatch and the method for producing the masterbatch (mixture (A)) in the working examples and comparative examples of the third embodiment are as described above.

[Working Example 1B]

(Preparation of interlayer film)

Ionomer 2 was placed in an extruder, kneaded at 170°C, and extruded to obtain an interlayer film having a thickness of 0.76 mm and a width of 1 m.

(Preparation of laminated glass)

Two glass sheets (length 20 cm × width 8 cm × thickness 2.75 mm; float plate glass (produced by Sanshiba Shozai Kabushiki Kaisha)) and an interlayer film according to Working Example 1B (length 20 cm × width 8 cm) were prepared, and a laminated glass was prepared using a method similar to that used for laminated glass (1) in Working Example 1A.

[Working Example 2B]

95 parts by mass of ionomer 1 and 5 parts by mass of a masterbatch were placed in an extruder, kneaded at 170°C, and extruded from the extruder to obtain an interlayer film having a thickness of 0.76 mm and a width of 1 m. Thereafter, a laminated glass was prepared using a method similar to that used in Working Example 1B.

[Working Example 3B]

This working example was carried out in the same way as in Working Example 1B, except that ionomer 3 was used instead of ionomer 2.

[Working Examples 4B to 6B]

Working examples 4B to 6B were carried out in the same way as Working Examples 1B to 3B, respectively, except that the thickness of the interlayer film was changed as shown in Table 3.

[Working Examples 7B to 9B]

Working examples 7B to 9B were carried out in the same way as Working Examples 1B to 3B, respectively, except that the thickness of the interlayer film was changed as shown in Tables 3 and 4.

[Working Example 10B]

This working example was carried out in the same way as Working Example 2B, except that blending quantities of raw materials were changed to 90 parts by mass of ionomer 1 and 10 parts by mass of the masterbatch, and the thickness of the interlayer film was changed as shown in Table 4.

[Working Example 11B]

This working example was carried out in the same way as Working Example 2B, except that the thickness of the interlayer film was changed as shown in Table 4.

[Comparative Example 1B]

A laminated glass was prepared using a method similar to that used in working Example 1B, except that a poly(vinyl butyral) resin sheet (DG-41 produced by Eastman) was used.

[Comparative Example 2B]

Ionomer 4 was placed in an extruder, kneaded at 170°C, and extruded to obtain an interlayer film having a thickness of 0.76 mm. Thereafter, a laminated glass was prepared using a method similar to that used in Working Example 1B.

[Comparative Examples 3B and 4B]

Comparative Examples 3B and 4B were carried out in the same way as Comparative Examples 1B and 2B, respectively, except that two sheets of an interlayer film were overlaid between two glass sheets.

[Comparative Examples 5B and 6B]

Comparative Examples 5B and 6B were carried out in the same way as Comparative Examples 1B and 2B, respectively, except that three sheets of an interlayer film were overlaid between two glass sheets.

[Table 3]

| | Working Example 1B | Working Example 2B | Working Example 3B | Working Example 4B | Working Example 5B | Working Example 6B | Working Example 7B |
|---|---|---|---|---|---|---|---|
| Type of resin | Ionomer 2 | Ionomer 1 | Ionomer 3 | Ionomer 2 | Ionomer 1 | Ionomer 3 | Ionomer 2 |
| Metal | Mg | Mg | Zn:Mg | Mg | Mg | Zn:Mg | Mg |
| MB/wt% | 0 | 5 | 0 | 0 | 5 | 0 | 0 |
| Tg(°C) | 69.37 | 63.86 | 69.70 | 69.37 | 63.86 | 69.70 | 69.37 |
| Film thickness (mm) | 0.76 | 0.76 | 0.76 | 1.52 | 1.52 | 1.52 | 2.28 |
| Bending stiffness at 25°C [N/mm] | 1479 | 1493 | 1430 | 1667 | 1695 | 1604 | 1855 |
| Bending stiffness at 50°C [N/mm] | 984 | 953 | 891 | 987 | 956 | 888 | 991 |
| Ratio (bending stiffness at 50°C/ bending stiffness at 25°C) | 0.66 | 0.64 | 0.62 | 0.59 | 0.56 | 0.55 | 0.53 |
| Rate of decrease in bending stiffness (assessment) | OK | OK | OK | OK | OK | OK | OK |
| Evaluation (stiffness at 40°C) | 1266 | 1212 | 1203 | 1364 | 1287 | 1268 | 1461 |

[Table 4]

| | Working Example 8B | Working Example 9B | Working Example 10B | Working Example 11B | Comparative Example 1B | Comparative Example 2B |
|---|---|---|---|---|---|---|
| Type of resin | Ionomer 1 | Ionomer 3 | Ionomer 1 | Ionomer 1 | PVB | Ionomer 4 |
| Metal | Mg | Zn:Mg | Mg | Mg | - | Na |
| MB/wt% | 5 | 0 | 10 | 5 | 0 | 0 |
| Tg(°C) | 63.86 | 69.70 | 63.86 | 63.86 | 43.07 | 46.65 |
| Film thickness (mm) | 2.28 | 2.28 | 1.05 | 1.05 | 0.76 | 0.76 |
| Bending stiffness at 25°C [N/mm] | 1897 | 1778 | 1573 | 1545 | 986 | 1535 |
| Bending stiffness at 50°C [N/mm] | 960 | 885 | 916 | 966 | 390 | 648 |
| Ratio (bending stiffness at 50°C/bending stiffness at 25°C) | 0.51 | 0.50 | 0.58 | 0.62 | 0.40 | 0.422 |
| Rate of decrease in bending stiffness (assessment) | OK | OK | OK | OK | NG | NG |
| Evaluation (stiffness at 40°C) | 1362 | 1332 | 1294 | 1291 | 399 | 953 |

[Table 5]

|  | Comparative Example 3B | Comparative Example 4B | Comparative Example 5B | Comparative Example 6B |
|---|---|---|---|---|
| Type of resin | PVB | Ionomer 4 | PVB | Ionomer 4 |
| Metal | - | Na | - | Na |
| MB/wt% | 0 | 0 | 0 | 0 |
| Tg(°C) | 43.07 | 46.65 | 43.07 | 46.65 |
| Film thickness(mm) | 1.52 | 1.52 | 2.28 | 2.28 |
| Bending stiffness at 25°C[N/mm] | 984 | 1750 | 981 | 1965 |
| Bending stiffness at 50°C[N/mm] | 383 | 634 | 375 | 619 |
| Ratio (bending stiffness at 50°C/bending stiffness at 25°C) | 0.389 | 0.362 | 0.382 | 0.315 |
| Rate of decrease in bending stiffness (assessment) | NG | NG | NG | NG |
| Evaluation (stiffness at 40°C) | 389 | 950 | 379 | 946 |

In the working examples above, because the ratio of the bending stiffness at 50°C relative to the bending stiffness at 25°C was 0.5 or more, excellent stiffness could be achieved not only close to room temperature, but also in an environment close to 40°C. Conversely, because the ratio of the bending stiffness at 50°C relative to the bending stiffness at 25°C was less than 0.5 in Comparative Examples 1B to 6B, even though excellent stiffness could be achieved close to room temperature, it was difficult to maintain high stiffness in an environment close to 40°C.

In addition, in Working Examples 2B, 5B, 8B, 10B and 11B, in which a masterbatch was used, because an ethylene-(meth)acrylic acid-based copolymer was used as a resin other than an ionomer resin, kneading during extrusion was facilitated, and the amount of interlayer film produced per unit time could be made higher than in other working examples in which a masterbatch was not used.

**Claims**

1.　An interlayer film which satisfies at least one of requirement (A) or requirement (B) described below.

Requirement (A): The slope (21), which is obtained from (bending stiffness (2) - bending stiffness (1))/amount of change in thickness, is more than -10.
Requirement (B): The slope (31), which is obtained from (bending stiffness (3) - bending stiffness (1))/amount of change in thickness, is more than -10.
(It should be noted that bending stiffness (1) is the bending stiffness [unit: N/mm] at 50°C of a laminated glass (1) for measurement, which is obtained by bonding two sheets of glass having a thickness of 2.75 mm via one interlayer film. The bending stiffness (2) is the bending stiffness [unit: N/mm] at 50°C of a laminated glass (2) for measurement, which is obtained by bonding two sheets of glass having a thickness of 2.75 mm via two interlayer films. The bending stiffness (3) is the bending stiffness [unit: N/mm] at 50°C of a laminated glass (3) for measurement, which is obtained by bonding two sheets of glass having a thickness of 2.75 mm via three interlayer films. The amount of change in thickness is the amount of change [unit: mm] in the thickness of the interlayer films disposed between the pair of glass sheets during the measurement of the bending stiffness (2) or the bending stiffness (3) with respect to the thickness of the interlayer film disposed between the pair of glass sheets during the measurement of the bending stiffness (1).)

2.　The interlayer film as claimed in claim 1, wherein the slope (21) is from -9 to 50 inclusive.

3. An interlayer film in which the ratio of the bending stiffness at 50°C relative to the bending stiffness at 25°C of a laminated glass for measurement, which is obtained by bonding two sheets of glass having a thickness of 2.75 mm via an interlayer film, is 0.5 or more.

4. The interlayer film as claimed in any one of claims 1-3, wherein the bending stiffness at 50°C of the laminated glass (1) for measurement or the aforementioned laminated glass for measurement is 700 N/mm or more.

5. The interlayer film as claimed in any one of claims 1-3, which contains an ionomer resin.

6. The interlayer film as claimed in claim 5, wherein the ionomer resin includes a constituent unit (A) derived from an unsaturated carboxylic acid, a constituent unit (B) of a neutralized unsaturated carboxylic acid and a constituent unit (C) derived from ethylene.

7. The interlayer film as claimed in claim 5, wherein the ionomer resin includes a constituent unit (A) derived from (meth) acrylic acid, a constituent unit (B) of neutralized (meth)acrylic acid and a constituent unit (C) derived from ethylene.

8. The interlayer film as claimed in claim 6, wherein the total content of the constituent units (A) and (B) in the ionomer resin is from 10 mass% to 25 mass% inclusive relative to the total amount of constituent units that constitute the ionomer resin.

9. The interlayer film as claimed in claim 5, wherein the content of the constituent unit (B) is from 4 mass% to 17.5 mass% inclusive relative to the total amount of constituent units that constitute the ionomer resin.

10. The interlayer film as claimed in claim 5, wherein the constituent unit (B) includes at least one of magnesium or zinc.

11. The interlayer film as claimed in claim 7, wherein the content of a constituent unit derived from an alkyl (meth)acrylate in the ionomer resin is 15 mass% or less.

12. The interlayer film as claimed in claim 5, which further contains a silane coupling agent.

13. The interlayer film as claimed in claim 1 or claim 2, which has a width of 1 m or more.

14. The interlayer film as claimed in claim 1 or claim 2, which is an extrusion molded product.

15. The interlayer film as claimed in claim 1 or claim 2, which has a glass transition temperature of from 50°C to 75°C inclusive.

16. A laminate which comprises the interlayer film as claimed in claim 1 or claim 2 and a pair of substrates, with the interlayer film being disposed between the pair of substrates.

17. The laminate as claimed in claim 16, which is a laminated glass.

18. The laminate as claimed in claim 17, which is a laminated glass for a building structure.

19. A method for producing the interlayer film as claimed in claim 1 or claim 2, the method comprising: a step for obtaining a resin composition by kneading an ionomer resin with a mixture of an additive and an ethylene-(meth)acrylic acid-based copolymer; and a step for extruding the resin composition.

20. A method for producing a laminate, the method including a step for disposing the interlayer film as claimed in claim 1 or claim 2 between a pair of substrates.

21. The method for producing a laminate as claimed in claim 20, wherein a plurality of interlayer films are disposed between the pair of substrates.

22. An interlayer film for which the slope (21a), which is obtained from (bending stiffness (2a) - bending stiffness (1))/amount of change in thickness, is more than -10.
(It should be noted that bending stiffness (1) is the bending stiffness [unit: N/mm] at 50°C of a laminated glass (1) for measurement, which is obtained by bonding two sheets of glass having a thickness of 2.75 mm via one interlayer film.

The bending stiffness (2a) is the bending stiffness [unit: N/mm] at 50°C of a laminated glass (2a) for measurement, which is obtained by bonding two sheets of glass having a thickness of 2.75 mm via an interlayer film (2a), which has a different thickness from the aforementioned interlayer film. The amount of change in thickness is the amount of change [unit: mm] in the thickness of the interlayer film disposed between the pair of glass sheets during the measurement of the bending stiffness (2a) with respect to the thickness of the interlayer film disposed between the pair of glass sheets during the measurement of the bending stiffness (1).)

23. A laminated glass which comprises a pair of glass members and one or more interlayer films disposed between the pair of glass members, with the pair of glass members being bonded via the one or more interlayer films, and

which satisfies at least one of requirement (A1) or requirement (B1) described below.
Requirement (A1): The slope (21c), which is obtained from (bending stiffness (2c) - bending stiffness (1c))/amount of change in thickness, is more than -10.
Requirement (B1): The slope (31c), which is obtained from (bending stiffness (3c) - bending stiffness (1c))/amount of change in thickness, is more than -10.
(It should be noted that bending stiffness (1c) is the bending stiffness [unit: N/mm] at 50°C of a laminated glass (1c) for measurement, which is obtained by bonding the pair of glass members via one interlayer film. The bending stiffness (2c) is the bending stiffness [unit: N/mm] at 50°C of a laminated glass (2c) for measurement, which is obtained by bonding the pair of glass members via two interlayer films. The bending stiffness (3c) is the bending stiffness [unit: N/mm] at 50°C of a laminated glass (3c) for measurement, which is obtained by bonding the pair of glass members via three interlayer films. The amount of change in thickness is the amount of change [unit: mm] in the thickness of the interlayer films disposed between the pair of glass members during the measurement of the bending stiffness (3c) or the bending stiffness (2c) with respect to the thickness of the interlayer films disposed between the pair of glass members during the measurement of the bending stiffness (1c).)

24. A laminated glass in which the ratio of the bending stiffness at 50°C relative to the bending stiffness at 25°C is 0.5 or more.

Fig. 1

## INTERNATIONAL SEARCH REPORT

| International application No. |
|---|
| **PCT/JP2024/034804** |

**A. CLASSIFICATION OF SUBJECT MATTER**

*C03C 27/12*(2006.01)i; *B32B 7/022*(2019.01)i; *B32B 17/10*(2006.01)i; *B32B 27/00*(2006.01)i; *C08K 5/541*(2006.01)i; *C08L 23/26*(2025.01)i

FI: C03C27/12 Z; C03C27/12 F; C08K5/541; C08L23/26; B32B27/00 B; B32B7/022; B32B17/10

According to International Patent Classification (IPC) or to both national classification and IPC

**B. FIELDS SEARCHED**

Minimum documentation searched (classification system followed by classification symbols)

C03C27/12; B32B1/00-43/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/181754 A1 (SEKISUI CHEMICAL CO., LTD.) 04 October 2018 (2018-10-04) paragraphs [0173], [0181]-[0182], tables 1-3 | 3, 24 |
| A | | 1-2, 4-23 |
| X | WO 2018/181747 A1 (SEKISUI CHEMICAL CO., LTD.) 04 October 2018 (2018-10-04) paragraphs [0200], [0213]-[0215], tables 1-3 | 3, 24 |
| A | | 1-2, 4-23 |
| A | JP 2014-58409 A (DU PONT MITSUI POLYCHEM CO., LTD.) 03 April 2014 (2014-04-03) | 1-24 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **04 December 2024** | **17 December 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/034804**

| Patent document cited in search report | | | Publication date (day/month/year) | Patent family member(s) | | | Publication date (day/month/year) |
|---|---|---|---|---|---|---|---|
| WO | 2018/181754 | A1 | 04 October 2018 | TW | 201842038 | A | |
| WO | 2018/181747 | A1 | 04 October 2018 | TW | 201842015 | A | |
| JP | 2014-58409 | A | 03 April 2014 | (Family: none) | | | |

Form PCT/ISA/210 (patent family annex) (July 2022)

**REFERENCES CITED IN THE DESCRIPTION**

**Patent documents cited in the description**

- WO 2022065146 A
- JP 2014058409 A
- WO 2019054363 A